# EUROPEAN PATENT APPLICATION

(11) **EP 4 554 075 A1**
(43) Date of publication of application: **14.05.2025**
(21) Application number: 23835360.1
(22) Date of filing: 26.06.2023
(51) Int. Cl.: H02M 7/48

(54) **POWER CONVERSION DEVICE**

(30) Priority: 08.07.2022 JP 2022110682
(71) Applicant: Panasonic Intellectual Property Management Co., Ltd., Kadoma-shi, Osaka 571-0057 (JP)
(72) Inventor: MAEDA, Ryosuke, Kadoma-shi, Osaka 571-0057 (JP); HIGASHIYAMA, Koji, Kadoma-shi, Osaka 571-0057 (JP); KAMON, Yutaka, Kadoma-shi, Osaka 571-0057 (JP)
(74) Representative: Novagraaf International SA
(86) International application number: PCT/JP2023/023642
(87) International publication number: WO 2024/009827

(57) **Abstract**

The problem is to contribute to increasing the power conversion efficiency. In a power converter (100), a controller (50) performs a first control operation including causing a high-level period of a control signal for each bidirectional switch (8), corresponding to one of a plurality of switching circuits (10), out of a plurality of bidirectional switches (8), to overlap with a dead time and setting a beginning of the high-level period at a point in time earlier than a beginning of the dead time by an additional time. If a potential detected at a fourth terminal (154) of a regenerative capacitor (15) is less than a first threshold value, the controller (50) performs a second control operation including controlling the plurality of bidirectional switches (8) to raise a potential (V15) at the fourth terminal (154) of the regenerative capacitor (15). If the potential detected is greater than a second threshold value, the controller (50) controls the plurality of bidirectional switches (8) to lower the potential (V15) at the fourth terminal (154) of the regenerative capacitor (15).

## Description

### Technical Field

The present disclosure generally relates to a power converter. More particularly, the present disclosure relates to a power converter having the ability to convert DC power into AC power.

### Background Art

Patent Literature 1 discloses a power converter for converting DC power into multiphase AC power.

The power converter of Patent Literature 1 includes a main switching means (power converter circuit), two capacitors, one coil (resonant inductor), a plurality of auxiliary switch elements, and a control means. The main switching means includes a plurality of main switching circuits provided for respective phases of the multiphase AC power. Each of the plurality of main switching circuits is implemented as a pair of main switch elements which are connected in series between both terminals of a DC power supply and uses, as the output node of its associated phase, the interconnection node of the pair of main switch elements. The two capacitors divide the voltage of the DC power supply. One terminal of the coil is connected to a voltage division node of the two capacitors. The plurality of auxiliary switch elements connect the other terminal of the coil and the output nodes of the respective phases. When determining that a plurality of phase currents flow through the coil, the control means controls the plurality of auxiliary switch elements to make the amount of current flowing through at least one phase smaller than a preset amount.

The power converter may cause a decrease in power conversion efficiency when the state of a load changes.

### Citation List

### Patent Literature

Patent Literature 1: JP 2010-233306 A

### Summary of Invention

An object of the present disclosure is to provide a power converter which may contribute to increasing the power conversion efficiency.

A power converter according to an aspect of the present disclosure includes a first DC terminal and a second DC terminal, a power converter circuit, a plurality of AC terminals, a plurality of bidirectional switches, a plurality of resonant capacitors, a regenerative capacitor, a first resonant inductor, a second resonant inductor, a third resonant inductor, and a controller. The power converter circuit includes a plurality of first switching elements and a plurality of second switching elements. In the power converter circuit, a plurality of switching circuits, in each of which one of the plurality of first switching elements and a corresponding one of the plurality of second switching elements are connected one to one in series, are connected to each other in parallel. In the power converter circuit, the plurality of first switching elements are connected to the first DC terminal, and the plurality of second switching elements are connected to the second DC terminal. The plurality of AC terminals are provided one to one for the plurality of switching circuits, respectively. Each of the plurality of AC terminals is connected to a connection node between the first switching element and the second switching element of a corresponding one of the plurality of switching circuits. The plurality of bidirectional switches are provided one to one for the plurality of switching circuits. Each of the plurality of bidirectional switches has a first terminal thereof connected to the connection node between the first switching element and the second switching element of a corresponding one of the plurality of switching circuits. The plurality of resonant capacitors are provided one to one for the plurality of bidirectional switches, respectively. Each of the plurality of resonant capacitors is connected between the first terminal of a corresponding one of the plurality of bidirectional switches and the second DC terminal. The regenerative capacitor has a third terminal and a fourth terminal. The third terminal of the regenerative capacitor is connected to either the first DC terminal or the second DC terminal. The first resonant inductor is connected between a first bidirectional switch belonging to the plurality of bidirectional switches and the fourth terminal of the regenerative capacitor. The second resonant inductor is connected between a second bidirectional switch belonging to the plurality of bidirectional switches and the fourth terminal of the regenerative capacitor. The third resonant inductor is connected between a third bidirectional switch belonging to the plurality of bidirectional switches and the fourth terminal of the regenerative capacitor. The controller applies a PWM signal having a potential alternating between a high level and a low level to each of the plurality of first switching elements and the plurality of second switching elements. The controller performs a first control operation. The first control operation includes setting, with respect to each of the plurality of switching circuits, a dead time between a high-level period of the PWM signal for the first switching element and a high-level period of the PWM signal for the second switching element. The first control operation further includes causing a high-level period of a control signal for each of the plurality of bidirectional switches, corresponding to one of the plurality of switching circuits, to overlap with the dead time and setting a beginning of the high-level period at a point in time earlier than a beginning of the dead time by an additional time. The controller acquires a potential detected at the fourth terminal of the regenerative capacitor. When the potential detected is less than a first threshold value that is less than one half of a value of voltage applied between the first DC terminal and the second DC terminal, the controller performs a second control operation including raising a potential at the fourth terminal of the regenerative capacitor. When the potential detected is greater than a second threshold value that is greater than one half of the value of the voltage applied between the first DC terminal and the second DC terminal, the controller performs a third control operation including lowering the potential at the fourth terminal of the regenerative capacitor.

A power converter according to another aspect of the present disclosure includes a first DC terminal and a second DC terminal, a power converter circuit, a plurality of AC terminals, a plurality of bidirectional switches, a plurality of resonant capacitors, a regenerative capacitor, a first resonant inductor, a second resonant inductor, a third resonant inductor, and a controller. The power converter circuit includes a plurality of first switching elements and a plurality of second switching elements. In the power converter circuit, a plurality of switching circuits, in each of which one of the plurality of first switching elements and a corresponding one of the plurality of second switching elements are connected one to one in series, are connected to each other in parallel. In the power converter circuit, the plurality of first switching elements are connected to the first DC terminal, and the plurality of second switching elements are connected to the second DC terminal. The plurality of AC terminals are provided one to one for the plurality of switching circuits, respectively. Each of the plurality of AC terminals is connected to a connection node between the first switching element and the second switching element of a corresponding one of the plurality of switching circuits. The plurality of bidirectional switches are provided one to one for the plurality of switching circuits. Each of the plurality of bidirectional switches has a first terminal thereof connected to the connection node between the first switching element and the second switching element of a corresponding one of the plurality of switching circuits. The plurality of resonant capacitors are provided one to one for the plurality of bidirectional switches, respectively. Each of the plurality of resonant capacitors is connected between the first terminal of a corresponding one of the plurality of bidirectional switches and the second DC terminal. The regenerative capacitor has a third terminal and a fourth terminal. The third terminal of the regenerative capacitor is connected to either the first DC terminal or the second DC terminal. The first resonant inductor is connected between a first bidirectional switch belonging to the plurality of bidirectional switches and the fourth terminal of the regenerative capacitor. The second resonant inductor is connected between a second bidirectional switch belonging to the plurality of bidirectional switches and the fourth terminal of the regenerative capacitor. The third resonant inductor is connected between a third bidirectional switch belonging to the plurality of bidirectional switches and the fourth terminal of the regenerative capacitor. The controller applies a PWM signal having a potential alternating between a high level and a low level to each of the plurality of first switching elements and the plurality of second switching elements. The controller performs a first control operation. The first control operation includes: setting, with respect to each of the plurality of switching circuits, a dead time between a high-level period of the PWM signal for the first switching element and a high-level period of the PWM signal for the second switching element. The first control operation includes causing a high-level period of a control signal for each of the plurality of bidirectional switches, corresponding to one of the plurality of switching circuits, to overlap with the dead time and setting a beginning of the high-level period at a point in time earlier than a beginning of the dead time by an additional time. The controller acquires a potential detected at the fourth terminal of the regenerative capacitor. When the potential detected is less than a first threshold value that is less than one half of a value of voltage applied between the first DC terminal and the second DC terminal, the controller performs a second control operation including applying, according to respective polarities of a plurality of output currents supplied from the plurality of AC terminals, a control signal having a high-level period, associated with a charging operation of the regenerative capacitor, to one bidirectional switch belonging to the plurality of bidirectional switches besides applying a control signal, having a high-level period overlapping with the dead time, to the one bidirectional switch in one cycle of a carrier signal. When the potential detected is greater than a second threshold value that is greater than one half of the value of the voltage applied between the first DC terminal and the second DC terminal, the controller performs a third control operation of applying, according to respective polarities of a plurality of output currents supplied from the plurality of AC terminals, a control signal having a high-level period, associated with a discharging operation of the regenerative capacitor, to one bidirectional switch belonging to the plurality of bidirectional switches besides applying the control signal, having the high-level period overlapping with the dead time, to the one bidirectional switch in one cycle of the carrier signal.

### Brief Description of Drawings

FIG. 1 is a circuit diagram of a system including a power converter according to a first embodiment;
FIG. 2 illustrates how the power converter may operate in a situation where its controller has performed a first control operation;
FIG. 3 illustrates how the power converter may also operate in a situation where its controller has performed the first control operation;
FIG. 4 illustrates how its controller may operate in the power converter;
FIG. 5 shows how duties, respectively corresponding to three-phase voltage instructions in an AC load connected to a plurality of AC terminals of the power converter, change with time;
FIG. 6 is a timing chart illustrating how the power converter may operate in a situation where its controller has performed a second control operation;
FIG. 7 is a timing chart illustrating how the power converter may operate in a situation where its controller has performed a third control operation;
FIG. 8 is a circuit diagram of a system including a power converter according to a second embodiment;
FIG. 9 is a timing chart illustrating how the power converter may operate in a situation where its controller has performed a first control operation;
FIG. 10 is a timing chart illustrating how the power converter may operate in a situation where its controller has performed a second control operation;
FIG. 11 is a timing chart illustrating how the power converter may also operate in the situation where its controller has performed the second control operation;
FIG. 12 is a timing chart illustrating how the power converter may operate in a situation where its controller has performed a third control operation;
FIG. 13 is a timing chart illustrating how the power converter may also operate in the situation where its controller has performed the third control operation;
FIG. 14 is a timing chart illustrating how a power converter according to a third embodiment may operate in a situation where its controller has performed a second control operation;
FIG. 15 is a timing chart illustrating how the power converter may operate in a situation where its controller has performed a third control operation;
FIG. 16 is a timing chart illustrating how a power converter according to a fourth embodiment may operate in a situation where its controller has performed a second control operation;
FIG. 17 is a timing chart illustrating how the power converter may operate in a situation where its controller has performed a third control operation;
FIG. 18 is a timing chart illustrating how a power converter according to a fifth embodiment may operate in a situation where its controller has performed a second control operation;
FIG. 19 is a timing chart illustrating how the power converter may operate in a situation where its controller has performed a third control operation;
FIG. 20 is a timing chart illustrating how a power converter according to a sixth embodiment may operate in a situation where its controller has performed a second control operation;
FIG. 21 is a timing chart illustrating how the power converter may operate in a situation where its controller has performed a third control operation;
FIG. 22 is a timing chart illustrating how a power converter according to a seventh embodiment may operate in a situation where its controller has performed a second control operation;
FIG. 23 is a timing chart illustrating how the power converter may operate in a situation where its controller has performed a third control operation;
FIG. 24 is a circuit diagram of a system including a power converter according to an eighth embodiment;
FIG. 25 is a circuit diagram of a system including a power converter according to a ninth embodiment;
FIG. 26 is a circuit diagram of a system including a power converter according to a first variation of the second embodiment;
FIG. 27 is a circuit diagram of a system including a power converter according to a second variation of the second embodiment;
FIG. 28 is a circuit diagram of a system including a power converter according to a third variation of the second embodiment;
FIG. 29 is a circuit diagram of a system including a power converter according to a fourth variation of the second embodiment; and
FIG. 30 is a circuit diagram of a system including a power converter according to a fifth variation of the second embodiment.

### Description of Embodiments

### (First embodiment)

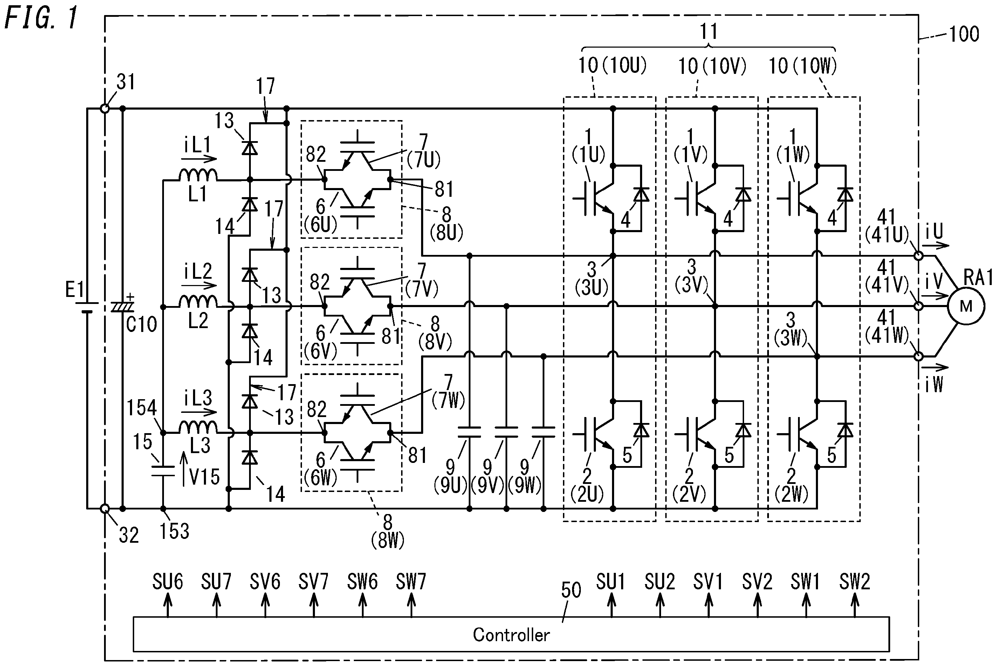

A power converter 100 according to a first embodiment will be described with reference to FIGS. 1-7.

### (1) Overall configuration for power converter

The power converter 100 includes a first DC terminal 31 and a second DC terminal 32, and a plurality of (e.g., three) AC terminals 41 as shown in FIG. 1, for example. A DC power supply E1 is connected between the first DC terminal 31 and the second DC terminal 32. An AC load RA1 is connected to the plurality of AC terminals 41. The AC load RA1 may be, for example, a three-phase motor. The power converter 100 converts the DC output of the DC power supply E1 into AC power and outputs the AC power to the AC load RA1. The DC power supply E1 may include, for example, a solar cell or a fuel cell. The DC power supply E1 may include a DC-DC converter. In the power converter 100, if the plurality of AC terminals 41 are three AC terminals 41, then the AC power may be, for example, three-phase AC power having U-, V-, and W-phases.

The power converter 100 includes a power converter circuit 11, a plurality of (e.g., three) bidirectional switches 8, a plurality of (e.g., three) resonant capacitors 9, a regenerative capacitor 15, a first resonant inductor L1, a second resonant inductor L2, a third resonant inductor L3, and a controller 50. The power converter 100 further includes a plurality of (e.g., three) protection circuits 17 and a capacitor C10.

The power converter circuit 11 includes a plurality of (e.g., three) first switching elements 1 and a plurality of (e.g., three) second switching elements 2. In the power converter circuit 11, a plurality of (e.g., three) switching circuits 10, in each of which one of the plurality of first switching elements 1 and a corresponding one of the plurality of second switching elements 2 are connected one to one in series, are connected in parallel. In the power converter circuit 11, the plurality of first switching elements 1 are connected to the first DC terminal 31 and the plurality of second switching elements 2 are connected to the second DC terminal 32. The plurality of AC terminals 41 are provided one to one for the plurality of switching circuits 10, respectively. Each of the plurality of AC terminals 41 is connected to a connection node 3 between the first switching element 1 and the second switching element 2 of a corresponding one of the plurality of switching circuits 10. The plurality of bidirectional switches 8 are provided one to one for the plurality of switching circuits 10, respectively. Each of the plurality of bidirectional switches 8 has a first terminal 81 thereof connected to the connection node 3 between the first switching element 1 and the second switching element 2 of a corresponding one of the plurality of switching circuits 10. The plurality of resonant capacitors 9 are provided one to one for the plurality of bidirectional switches 8, respectively. Each of the plurality of resonant capacitors 9 is connected between the first terminal of a corresponding one of the plurality of bidirectional switches 8 and the second DC terminal 32. The regenerative capacitor 15 has a third terminal 153 and a fourth terminal 154. The third terminal 153 is connected to the second DC terminal 32. The first resonant inductor L1, the second resonant inductor L2, and the third resonant inductor L3 are respectively connected between the three bidirectional switches 8 and the fourth terminal 154 of the regenerative capacitor 15. The controller 50 controls the plurality of first switching elements 1, the plurality of second switching elements 2, and the plurality of bidirectional switches 8.

### (2) Details of power converter

In the following description, as for the plurality of switching circuits 10, the switching circuits 10 for the U-, V, and W-phases will be hereinafter referred to as a "switching circuit 10U," a "switching circuit 10V," and a "switching circuit 10W," respectively, for the sake of convenience of description. Also, in the following description, the first switching element 1 and second switching element 2 of the switching circuit 10U will be hereinafter referred to as a "first switching element 1U" and a "second switching element 2U." Likewise, in the following description, the first switching element 1 and second switching element 2 of the switching circuit 10V will be hereinafter referred to as a "first switching element 1V" and a "second switching element 2V." Likewise, in the following description, the first switching element 1 and second switching element 2 of the switching circuit 10W will be hereinafter referred to as a "first switching element 1W" and a "second switching element 2W." Furthermore, in the following description, the connection node 3 between the first switching element 1U and the second switching element 2U will be hereinafter referred to as a "connection node 3U," the connection node 3 between the first switching element 1V and the second switching element 2V will be hereinafter referred to as a "connection node 3V," and the connection node 3 between the first switching element 1W and the second switching element 2W will be hereinafter referred to as a "connection node 3W." Furthermore, in the following description, the AC terminal 41 connected to the connection node 3U will be hereinafter referred to as an "AC terminal 41U," the AC terminal 41 connected to the connection node 3V will be hereinafter referred to as an "AC terminal 41V," and the AC terminal 41 connected to the connection node 3W will be hereinafter referred to as an "AC terminal 41W." Furthermore, in the following description, the resonant capacitor 9 connected to the second switching element 2U in parallel will be hereinafter referred to as a "resonant capacitor 9U," the resonant capacitor 9 connected to the second switching element 2V in parallel will be hereinafter referred to as a "resonant capacitor 9V," and the resonant capacitor 9 connected to the second switching element 2W in parallel will be hereinafter referred to as a "resonant capacitor 9W." Furthermore, in the following description, the bidirectional switch 8 connected to the connection node 3U will be hereinafter referred to as a "bidirectional switch 8U (first bidirectional switch 8U)," the bidirectional switch 8 connected to the connection node 3V will be hereinafter referred to as a "bidirectional switch 8V (second bidirectional switch 8V)," and the bidirectional switch 8 connected to the connection node 3W will be hereinafter referred to as a "bidirectional switch 8W (third bidirectional switch 8W)."

In the power converter 100, the higher-potential output terminal (positive electrode) of the DC power supply E1 is connected to the first DC terminal 31, and the lower-potential output terminal (negative electrode) of the DC power supply E1 is connected to the second DC terminal 32. Also, in the power converter 100, the U-, V, and W-phases of the AC load RA1 are connected to the three AC terminals 41U, 41V, and 41W, respectively.

In the power converter circuit 11, each of the plurality of (e.g., three) first switching elements 1 and the plurality of (e.g., three) second switching elements 2 has a control terminal, a first main terminal, and a second main terminal. The respective control terminals of the plurality of first switching elements 1 and the plurality of second switching elements 2 are connected to the controller 50. In each of the plurality of switching circuits 10 of the power converter 100, the first main terminal of the first switching element 1 is connected to the first DC terminal 31, the second main terminal of the first switching element 1 is connected to the first main terminal of the second switching element 2, and the second main terminal of the second switching element 2 is connected to the second DC terminal 32. In each of the plurality of switching circuits 10, the first switching element 1 is a high-side switching element (P-side switching element) and the second switching element 2 is a low-side switching element (N-side switching element). Each of the plurality of first switching elements 1 and the plurality of second switching elements 2 may be, for example, an insulated gate bipolar transistor (IGBT). Thus, in each of the plurality of first switching elements 1 and the plurality of second switching elements 2, the control terminal, the first main terminal, and the second main terminal thereof are a gate terminal, a collector terminal, and an emitter terminal, respectively.

The power converter circuit 11 further includes a plurality of (e.g., three) first diodes 4 which are connected one to one to the plurality of (e.g., three) first switching elements 1 in antiparallel and a plurality of (e.g., three) second diodes 5 which are connected one to one to the plurality of (e.g., three) second switching elements 2 in antiparallel. In each of the plurality of first diodes 4, the anode of the first diode 4 is connected to the second main terminal (emitter terminal) of the first switching element 1 corresponding to the first diode 4, and the cathode of the first diode 4 is connected to the first main terminal (collector terminal) of the first switching element 1 corresponding to the first diode 4. In each of the plurality of second diodes 5, the anode of the second diode 5 is connected to the second main terminal (emitter terminal) of the second switching element 2 corresponding to the second diode 5, and the cathode of the second diode 5 is connected to the first main terminal (collector terminal) of the second switching element 2 corresponding to the second diode 5.

The U-phase of the AC load RA1, for example, may be connected to the connection node 3U between the first switching element 1U and the second switching element 2U via the AC terminal 41U. The V-phase of the AC load RA1, for example, may be connected to the connection node 3V between the first switching element 1V and the second switching element 2V via the AC terminal 41V. The W-phase of the AC load RA1, for example, may be connected to the connection node 3W between the first switching element 1W and the second switching element 2W via the AC terminal 41W.

The plurality of resonant capacitors 9 are provided one to one for the plurality of bidirectional switches 8. Each of the plurality of resonant capacitors 9 is connected between the first terminal 81 of its corresponding bidirectional switch 8 and the second DC terminal 32. The power converter 100 includes a plurality of resonant circuits. The plurality of resonant circuits includes a first resonant circuit having the resonant capacitor 9U and the first resonant inductor L1, a second resonant circuit having the resonant capacitor 9V and the second resonant inductor L2, and a third resonant circuit having the resonant capacitor 9W and the third resonant inductor L3.

Each of the plurality of bidirectional switches 8 may include, for example, two IGBTs, namely, a first IGBT 6 and a second IGBT 7, which are connected together in antiparallel. In each of the plurality of bidirectional switches 8, the collector terminal of the first IGBT 6 and the emitter terminal of the second IGBT 7 are connected to each other and the emitter terminal of the first IGBT 6 and the collector terminal of the second IGBT 7 are connected to each other. In each of the plurality of bidirectional switches 8, the emitter terminal of the first IGBT 6 is connected to the connection node 3 of the switching circuit 10 corresponding to the bidirectional switch 8 including the first IGBT 6. In each of the plurality of bidirectional switches 8, the collector terminal of the second IGBT 7 is connected to the connection node 3 of the switching circuit 10 corresponding to the bidirectional switch 8 including the second IGBT 7. The bidirectional switch 8U is connected to the connection node 3U between the first switching element 1U and the second switching element 2U. The bidirectional switch 8V is connected to the connection node 3V between the first switching element 1V and the second switching element 2V. The bidirectional switch 8W is connected to the connection node 3W between the first switching element 1W and the second switching element 2W. In the following description, the first IGBT 6 and second IGBT 7 of the bidirectional switch 8U will be hereinafter referred to as a "first IGBT 6U" and a "second IGBT 7U," respectively, the first IGBT 6 and second IGBT 7 of the bidirectional switch 8V will be hereinafter referred to as a "first IGBT 6V" and a "second IGBT 7V," respectively, and the first IGBT 6 and second IGBT 7 of the bidirectional switch 8W will be hereinafter referred to as a "first IGBT 6W" and a "second IGBT 7W," respectively, for the sake of convenience of description.

The plurality of bidirectional switches 8 are controlled by the controller 50. In other words, the first IGBT 6U, the second IGBT 7U, the first IGBT 6V, the second IGBT 7V, the first IGBT 6W, and the second IGBT 7W are controlled by the controller 50.

The regenerative capacitor 15 is connected between the first resonant inductor L1, the second resonant inductor L2, and the third resonant inductor L3 and the second DC terminal 32. The regenerative capacitor 15 may be, for example, a film capacitor.

The first resonant inductor L1 is connected between the fourth terminal 154 of the regenerative capacitor 15 and the second terminal 82 of the bidirectional switch 8U. The second resonant inductor L2 is connected between the fourth terminal 154 of the regenerative capacitor 15 and the second terminal 82 of the bidirectional switch 8V. The third resonant inductor L3 is connected between the fourth terminal 154 of the regenerative capacitor 15 and the second terminal 82 of the bidirectional switch 8W.

The power converter 100 includes a plurality of (e.g., three) protection circuits 17 as described above. The plurality of protection circuits 17 are respectively provided one to one for the U-, V, and W-phases of the AC load RA1.

The plurality of protection circuits 17 are connected between the first DC terminal 31 and the second DC terminal 32. Each of the plurality of protection circuits 17 includes a third diode 13 and a fourth diode 14 connected to the third diode 13 in series. The plurality of protection circuits 17 are provided one to one for the plurality of bidirectional switches 8. In each of the plurality of protection circuits 17, the connection node between the third diode 13 and the fourth diode 14 is connected to the second terminal 82 of a corresponding one of the bidirectional switches 8. The third diode 13 has its anode connected to the second terminal 82 of the bidirectional switch 8 and has its cathode connected to the first DC terminal 31. The fourth diode 14 has its anode connected to the second DC terminal 32 and has its cathode connected to the second terminal 82 of the bidirectional switch 8.

The capacitor C10 is connected between the first DC terminal 31 and the second DC terminal 32 and is connected to the power converter circuit 11 in parallel. The capacitor C10 may be, for example, an electrolytic capacitor.

The controller 50 controls the plurality of first switching elements 1, the plurality of second switching elements 2, and the plurality of bidirectional switches 8. The agent that performs the functions of the controller 50 includes a computer system. The computer system includes a single or a plurality of computers. The computer system may include a processor and a memory as principal hardware components thereof. The computer system serves as the agent that performs the functions of the controller 50 according to the present disclosure by making the processor execute a program stored in the memory of the computer system. The program may be stored in advance in the memory of the computer system. Alternatively, the program may also be downloaded through a telecommunications line or be distributed after having been recorded in a non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The controller 50 outputs pulse width modulation (PWM) signals SU1, SV1, SW1 to control the ON/OFF states of the plurality of first switching elements 1U, 1V, 1W, respectively. Each of the PWM signals SU1, SV1, SW1 is a signal having, for example, a potential level that alternates between a first potential level (hereinafter referred to as a "low level") and a second potential level (hereinafter referred to as a "high level") higher than the first potential level. The first switching elements 1U, 1V, 1W respectively turn ON when the PWM signals SU1, SV1, SW1 have high level and respectively turn OFF when the PWM signals SU1, SV1, SW1 have low level. In addition, the controller 50 also outputs PWM signals SU2, SV2, SW2 to control the ON/OFF states of the plurality of second switching elements 2U, 2V, 2W, respectively. Each of the PWM signals SU2, SV2, SW2 is a signal having, for example, a potential level that alternates between the first potential level (hereinafter referred to as a "low level") and the second potential level (hereinafter referred to as a "high level") higher than the first potential level. The second switching elements 2U, 2V, 2W respectively turn ON when the PWM signals SU2, SV2, SW2 have high level and respectively turn OFF when the PWM signals SU2, SV2, SW2 have low level.

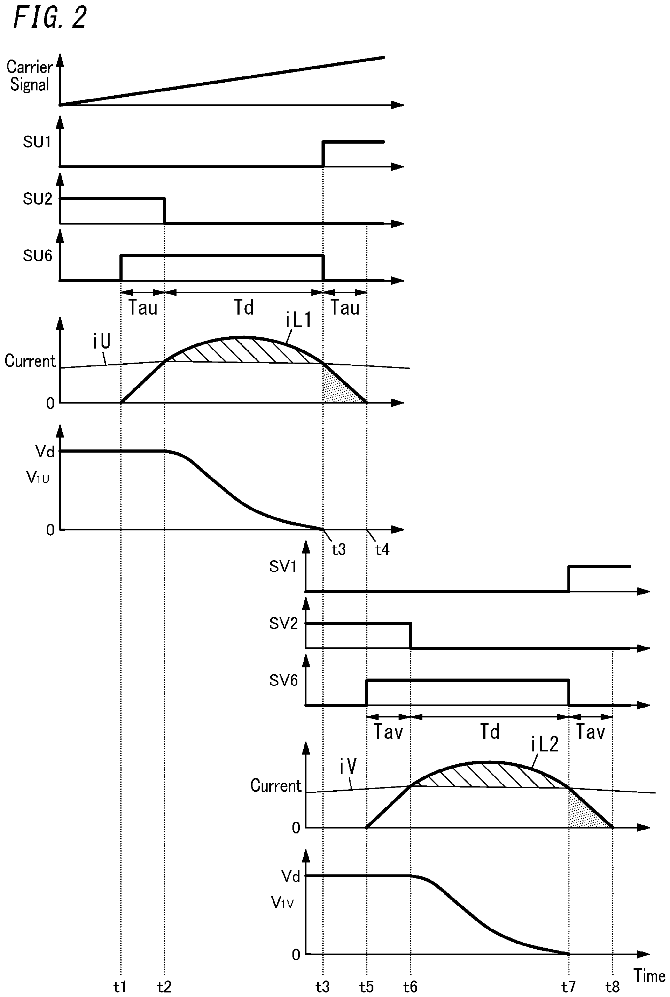

The controller 50 generates, using a carrier signal (refer to FIG. 2) having a saw-tooth waveform, the PWM signals SU1, SV1, SW1 to be applied to the plurality of first switching elements 1U, 1V, 1W, respectively, and the PWM signals SU2, SV2, SW2 to be applied to the plurality of second switching elements 2U, 2V, 2W, respectively. More specifically, the controller 50 generates, based on at least the carrier signal and a U-phase voltage instruction, the PWM signals SU1, SU2 to be applied to the first switching element 1U and the second switching element 2U, respectively. Also, the controller 50 generates, based on at least the carrier signal and a V-phase voltage instruction, the PWM signals SV1, SV2 to be applied to the first switching element 1V and the second switching element 2V, respectively. Furthermore, the controller 50 generates, based on at least the carrier signal and a W-phase voltage instruction, the PWM signals SW1, SW2 to be applied to the first switching element 1W and the second switching element 2W, respectively. The U-phase voltage instruction, the V-phase voltage instruction, and the W-phase voltage instruction may be, for example, sinusoidal wave signals, of which the phases are different from each other by 120 degrees and of which the amplitude (voltage instruction value) changes with time. Also, the U-phase voltage instruction, the V-phase voltage instruction, and the W-phase voltage instruction each have one cycle of the same length. In addition, one cycle of the U-phase voltage instruction, the V-phase voltage instruction, and the W-phase voltage instruction is longer than one cycle of the carrier signal.

The duty of the PWM signals SU1, SU2 to be applied from the controller 50 to the first switching element 1U and the second switching element 2U, respectively, varies in accordance with the U-phase voltage instruction. The controller 50 generates the PWM signal SU1 to be applied to the first switching element 1U by comparing the U-phase voltage instruction with the carrier signal. The controller 50 generates the PWM signal SU2 to be applied to the second switching element 2U by inverting the PWM signal SU1 to be applied to the first switching element 1U. In addition, to prevent the respective ON periods of the first switching element 1U and the second switching element 2U from overlapping with each other, the controller 50 sets a dead time Td (refer to FIG. 2) between a high-level period of the PWM signal SU1 and a high-level period of the PWM signal SU2.

The duty of the PWM signals SV1, SV2 to be applied from the controller 50 to the first switching element 1V and the second switching element 2V, respectively, varies in accordance with the V-phase voltage instruction. The controller 50 generates the PWM signal SV1 to be applied to the first switching element 1V by comparing the V-phase voltage instruction with the carrier signal. The controller 50 generates the PWM signal SV2 to be applied to the second switching element 2V by inverting the PWM signal SV1 to be applied to the first switching element 1V. In addition, to prevent the respective ON periods of the first switching element 1V and the second switching element 2V from overlapping with each other, the controller 50 sets the dead time Td (refer to FIG. 2) between a high-level period of the PWM signal SV1 and a high-level period of the PWM signal SV2.

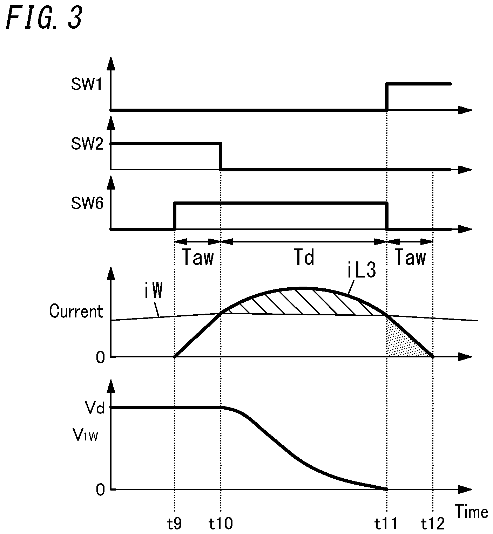

The duty of the PWM signals SW1, SW2 to be applied from the controller 50 to the first switching element 1W and the second switching element 2W, respectively, varies in accordance with the W-phase voltage instruction. The controller 50 generates the PWM signal SW1 to be applied to the first switching element 1W by comparing the W-phase voltage instruction with the carrier signal. The controller 50 generates the PWM signal SW2 to be applied to the second switching element 2W by inverting the PWM signal SW1 to be applied to the first switching element 1W. In addition, to prevent the respective ON periods of the first switching element 1W and the second switching element 2W from overlapping with each other, the controller 50 sets a dead time Td (refer to FIG. 3) between a high-level period of the PWM signal SW1 and a high-level period of the PWM signal SW2.

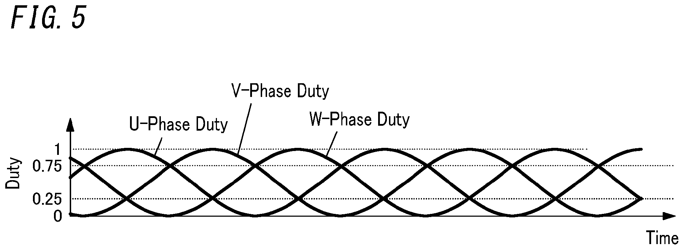

The U-phase voltage instruction, the V-phase voltage instruction, and the W-phase voltage instruction may be, for example, sinusoidal wave signals, of which the phases are different from each other by 120 degrees and of which the amplitude changes with time. Thus, the respective duties (i.e., U-phase, V-phase, and W-phase duties) of the PWM signals SU1, SV1, SW1 change in the form of sinusoidal waves, of which the phases are different from each other by 120 degrees, as shown in FIG. 5, for example. In the same way, the respective duties of the PWM signals SU2, SV2, SW2 also change in the form of sinusoidal waves, of which the phases are different from each other by 120 degrees.

The controller 50 generates the respective PWM signals SU1, SU2, SV1, SV2, SW1, SW2 based on the carrier signal, the respective voltage instructions, and information about the state of the AC load RA1. For example, if the AC load RA1 is a three-phase motor, the information about the state of the AC load RA1 may include, for example, detection values provided by a plurality of current sensors for respectively detecting output currents iU, iV, iW flowing through the U-, V-, and W-phases of the AC load RA1.

The plurality of bidirectional switches 8, the first resonant inductor L1, the second resonant inductor L2, the third resonant inductor L3, the plurality of resonant capacitors 9, and the regenerative capacitor 15 are provided to make zero-voltage soft switching of the plurality of first switching elements 1 and the plurality of second switching elements 2.

In this power converter 100, the controller 50 controls not only the plurality of first switching elements 1 and the plurality of second switching elements 2 of the power converter circuit 11 but also the plurality of bidirectional switches 8 as well.

The controller 50 generates control signals SU6, SU7, SV6, SV7, SW6, SW7 for controlling the respective ON/OFF states of the first IGBT 6U, the second IGBT 7U, the first IGBT 6V, the second IGBT 7V, the first IGBT 6W, and the second IGBT 7W, respectively, and outputs the control signals SU6, SU7, SV6, SV7, SW6, SW7 to the respective gate terminals of the first IGBT 6U, the second IGBT 7U, the first IGBT 6V, the second IGBT 7V, the first IGBT 6W, and the second IGBT 7W.

If the first IGBT 6U is ON and the second IGBT 7U is OFF, the bidirectional switch 8U allows a charging current that flows through the regenerative capacitor 15, the first resonant inductor L1, the bidirectional switch 8U, the connection node 3U, and the resonant capacitor 9U in this order to charge the resonant capacitor 9U to pass therethrough. On the other hand, if the first IGBT 6U is OFF and the second IGBT 7U is ON, the bidirectional switch 8U allows a discharging current that flows through the resonant capacitor 9U, the connection node 3U, the bidirectional switch 8U, the first resonant inductor L1, and the regenerative capacitor 15 in this order to remove electric charges from the resonant capacitor 9U to pass therethrough.

If the first IGBT 6V is ON and the second IGBT 7V is OFF, the bidirectional switch 8V allows a charging current that flows through the regenerative capacitor 15, the second resonant inductor L2, the bidirectional switch 8V, the connection node 3V, and the resonant capacitor 9V in this order to charge the resonant capacitor 9V to pass therethrough. On the other hand, if the first IGBT 6V is OFF and the second IGBT 7V is ON, the bidirectional switch 8V allows a discharging current that flows through the resonant capacitor 9V, the connection node 3V, the bidirectional switch 8V, the second resonant inductor L2, and the regenerative capacitor 15 in this order to remove electric charges from the resonant capacitor 9V to pass therethrough.

If the first IGBT 6W is ON and the second IGBT 7W is OFF, the bidirectional switch 8W allows a charging current that flows through the regenerative capacitor 15, the third resonant inductor L3, the bidirectional switch 8W, the connection node 3W, and the resonant capacitor 9W in this order to charge the resonant capacitor 9W to pass therethrough. On the other hand, if the first IGBT 6W is OFF and the second IGBT 7W is ON, the bidirectional switch 8W allows a discharging current that flows through the resonant capacitor 9W, the connection node 3W, the bidirectional switch 8W, the third resonant inductor L3, and the regenerative capacitor 15 in this order to remove electric charges from the resonant capacitor 9W to pass therethrough.

### (3) Operation of power converter

In the following description, as for each of currents iL1, iL2, iL3 flowing through the first resonant inductor L1, the second resonant inductor L2, and the third resonant inductor L3, respectively, if the current iL1, iL2, iL3 flows in the direction indicated by a corresponding one of the arrows shown in FIG. 1, then the polarity of the current iL1, iL2, iL3 is supposed to be positive. On the other hand, if the current iL1, iL2, iL3 flows in the direction opposite from the one indicated by the arrow shown in FIG. 1, then the polarity of the current iL1, iL2, iL3 is supposed to be negative. In addition, in the following description, as for each of output currents iU, iV, iW respectively flowing through the U-, V-, and W-phases of the AC load RA1, if the current iU, iV, iW flows in the direction indicated by a corresponding one of the arrows shown in FIG. 1, then the polarity of the current iU, iV, iW is supposed to be positive. On the other hand, if the current iU, iV, iW flows in the direction opposite from the one indicated by the arrow shown in FIG. 1, then the polarity of the current iU, iV, iW is supposed to be negative.

In this power converter 100, the first IGBT 6U of the bidirectional switch 8U may turn OFF in a state where the first IGBT 6U of the bidirectional switch 8U is ON and the positive current iL1 is flowing through the first resonant inductor L1, for example. In that case, the current iL1 flowing through the first resonant inductor L1 is regenerated to the power converter circuit 11 via the third diode 13 until the current iL1 flowing through the first resonant inductor L1 goes zero due to the consumption of energy of the first resonant inductor L1. Also, in this power converter 100, the second IGBT 7U of the bidirectional switch 8U may turn OFF in a state where the second IGBT 7U of the bidirectional switch 8U is ON and the negative current iL1 is flowing through the first resonant inductor L1, for example. In that case, the current iL1 flows through the first resonant inductor L1 along the path passing through the fourth diode 14, the first resonant inductor L1, and the regenerative capacitor 15 in this order until the current iL1 goes zero due to the consumption of energy of the first resonant inductor L1.

Furthermore, in this power converter 100, the first IGBT 6V of the bidirectional switch 8V may turn OFF in a state where the first IGBT 6V of the bidirectional switch 8V is ON and the positive current iL2 is flowing through the second resonant inductor L2, for example. In that case, the current iL2 flowing through the second resonant inductor L2 is regenerated to the power converter circuit 11 via the third diode 13 until the current iL2 flowing through the second resonant inductor L2 goes zero due to the consumption of energy of the second resonant inductor L2. Furthermore, in this power converter 100, the second IGBT 7V of the bidirectional switch 8V may turn OFF in a state where the second IGBT 7V of the bidirectional switch 8V is ON and the negative current iL2 is flowing through the second resonant inductor L2, for example. In that case, the current iL2 flows through the second resonant inductor L2 along the path passing through the fourth diode 14, the second resonant inductor L2, and the regenerative capacitor 15 in this order until the current iL2 goes zero due to the consumption of energy of the second resonant inductor L2.

Furthermore, in this power converter 100, the first IGBT 6W of the bidirectional switch 8W may turn OFF in a state where the first IGBT 6W of the bidirectional switch 8W is ON and the positive current iL1 is flowing through the third resonant inductor L3, for example. In that case, the current iL3 flowing through the third resonant inductor L3 is regenerated to the power converter circuit 11 via the third diode 13 until the current iL3 flowing through the third resonant inductor L3 goes zero due to the consumption of energy of the third resonant inductor L3. Furthermore, in this power converter 100, the second IGBT 7W of the bidirectional switch 8W may turn OFF in a state where the second IGBT 7W of the bidirectional switch 8W is ON and the negative current iL3 is flowing through the third resonant inductor L3, for example. In that case, the current iL3 flows through the third resonant inductor L3 along the path passing through the fourth diode 14, the third resonant inductor L3, and the regenerative capacitor 15 in this order until the current iL3 goes zero due to the consumption of energy of the third resonant inductor L3.

Next, it will be described with reference to FIGS. 1-3 how the controller 50 performs a first control operation to make zero-voltage soft switching control of each of the plurality of first switching elements 1 and the plurality of second switching elements 2.

The controller 50 performs the first control operation by setting, with respect to each of the plurality of switching circuits 10, a dead time Td between a high-level period of the PWM signal SU1, SV1, SW1 for the first switching element 1U, 1V, 1W and a high-level period of the PWM signal SU2, SV2, SW2 for the second switching element 2U, 2V, 2W. In addition, the controller 50 also performs the first control operation by causing a high-level period of a control signal for each of the plurality of bidirectional switches 8, corresponding to one of the plurality of switching circuits 10, to overlap with the dead time Td and setting the beginning of the high-level period at a point in time earlier than the beginning of the dead time Td by an additional time.

The first control operation will now be described in further detail.

When the zero-voltage soft switching control is performed on the first switching element 1, the voltage across the first switching element 1 needs to be reduced to zero just before the first switching element 1 as the target of zero-voltage soft switching turns ON. Thus, the controller 50 turns ON the first IGBT 6 corresponding to the first switching element 1 as the target of the zero-voltage soft switching control. In this manner, the controller 50 causes the resonant inductor and resonant capacitor 9 connected to the first switching element 1 to produce resonance and charge the resonant capacitor 9 with the electric charges stored in the regenerative capacitor 15, thereby reducing the voltage across the first switching element 1 to zero. In this case, the resonant inductor may be the first resonant inductor L1, the second resonant inductor L2, or the third resonant inductor L3.

On the other hand, when the zero-voltage soft switching control is performed on the second switching element 2, the voltage across the second switching element 2 needs to be reduced to zero just before the second switching element 2 as the target of the zero-voltage soft switching control turns ON. Thus, the controller 50 turns ON the second IGBT 7 corresponding to the second switching element 2 as the target of the zero-voltage soft switching control. In this manner, the controller 50 causes the resonant inductor and resonant capacitor 9 connected to the second switching element 2 to produce resonance and discharge electricity from the resonant capacitor 9 to the regenerative capacitor 15, thereby reducing the voltage across the second switching element 2 to zero. The controller 50 charges and discharges the resonant capacitor 9 via the bidirectional switch 8 such that the dead time Td agrees with a half cycle (π × √LC) of LC resonance. This allows the power converter 100 to make zero-voltage soft switching.

The PWM signals SU1, SU2 to be respectively applied from the controller 50 to the first switching element 1U and the second switching element 2U of the switching circuit 10U are shown in FIG. 2. In addition, the control signal SU6 to be supplied from the controller 50 to the first IGBT 6U of the bidirectional switch 8U, the output current iU flowing through the U-phase of the AC load RA1, the current iL1 flowing through the first resonant inductor L1, and the voltage V_{1U} across the first switching element 1U are also shown in FIG. 2. Furthermore, the PWM signals SV1, SV2 to be respectively applied from the controller 50 to the first switching element 1V and the second switching element 2V of the switching circuit 10V are shown in FIG. 2. In addition, the control signal SV6 to be supplied from the controller 50 to the first IGBT 6V of the bidirectional switch 8V, the output current iV flowing through the V-phase of the AC load RA1, the current iL2 flowing through the second resonant inductor L2, and the voltage V_{1V} across the first switching element 1V are also shown in FIG. 2.

Furthermore, the dead time Td that the controller 50 sets to prevent the first switching element 1 and the second switching element 2 of the same phase from turning ON simultaneously is also shown in FIG. 2. Besides, an additional time Tau set by the controller 50 with respect to the control signal SU6 for the first IGBT 6U of the bidirectional switch 8U and an additional time Tav set by the controller 50 with respect to the control signal SV6 for the first IGBT 6V of the bidirectional switch 8V are also shown in FIG. 2. The additional time Tau and the additional time Tav will be described later.

The PWM signals SW1, SW2 to be respectively applied from the controller 50 to the first switching element 1W and the second switching element 2W of the switching circuit 10W are shown in FIG. 3. In addition, the control signal SW6 to be supplied from the controller 50 to the first IGBT 6W of the bidirectional switch 8W and the output current iW flowing through the W-phase of the AC load RA1 are also shown in FIG. 3. The current iL3 flowing through the third resonant inductor L3 is also shown in FIG. 3. The voltage V_{1W} across the first switching element 1W is also shown in FIG. 3.

Furthermore, the dead time Td that the controller 50 sets to prevent the first switching element 1W and the second switching element 2W from turning ON simultaneously is also shown in FIG. 3. Besides, an additional time Taw set by the controller 50 with respect to the control signal SW6 for the first IGBT 6W of the bidirectional switch 8W is also shown in FIG. 3. The additional time Taw will be described later.

The additional time Tau is an amount of time that the controller 50 provides to make the high-level period of the control signal SU6 longer than the dead time Td by setting the beginning t1 of the high-level period of the control signal SU6 at a point in time earlier than the beginning t2 of the dead time Td as shown in FIG. 2. The length of the additional time Tau is determined by the value of the output current iU. To start producing the LC resonance from the beginning t2 of the dead time Td, it is preferable that the value of the current iL1 agree with the value of the output current iU at the beginning t2 of the dead time Td. This is because as long as iL1 < iU is satisfied, all current flows through the AC load RA1, and therefore, the resonant capacitor 9U cannot be charged. The end of the high-level period of the control signal SU6 may be simultaneous with, or later than, the end t3 of the dead time Td. In the example shown in FIG. 2, the end of the high-level period of the control signal SU6 is set to be simultaneous with the end t3 of the dead time Td. The controller 50 sets the high-level period of the control signal SU6 at Tau + Td. The voltage V_{1U} across the first switching element 1U goes zero at the end t3 of the dead time Td. In the example shown in FIG. 2, the current iL1 starts flowing through the first resonant inductor L1 at the beginning t1 of the high-level period of the control signal SU6 and goes zero at a time t4 when the additional time Tau has passed since the end t3 of the dead time Td. At this time, the current iL1 satisfies iL1 ≥ iU from the beginning t2 of the dead time Td, and therefore, the current iL1 in the hatched part of the current waveform shown as the fifth waveform from the top of FIG. 2 flows into the resonant capacitor 9U to produce LC resonance. From the end t3 of the dead time Td and on, the current iL1 will be regenerated to the power converter circuit 11 via the third diode 13 directly connected to the first resonant inductor L1.

To start producing the LC resonance at the beginning t2 of the dead time Td as described above, the controller 50 determines the additional time Tau based on the output current iU such that iL1 = iU is satisfied at the beginning t2 of the dead time Td. More specifically, using either the detection result of the output current iU by a current sensor or a signal processing value thereof, or an estimated value of the current iU, the inductance L₁ of the first resonant inductor L1 that has been stored in advance, and the detection result of the voltage across the regenerative capacitor 15 (i.e., the potential V15 at the fourth terminal 154 of the regenerative capacitor 15), for example, the controller 50 determines the additional time Tau by the equation: Tau = iU × (L₁/V15). In this case, as the detection result of the output current iU or the signal processing value thereof, either a detection value at a carrier cycle at which the additional time Tau is added or a detection value at a timing closest to the carrier cycle may be used. Also, in this case, as the estimated value of the output current iU, a value of the output current iU estimated at the carrier cycle at which the additional time Tau is added may be used, for example.

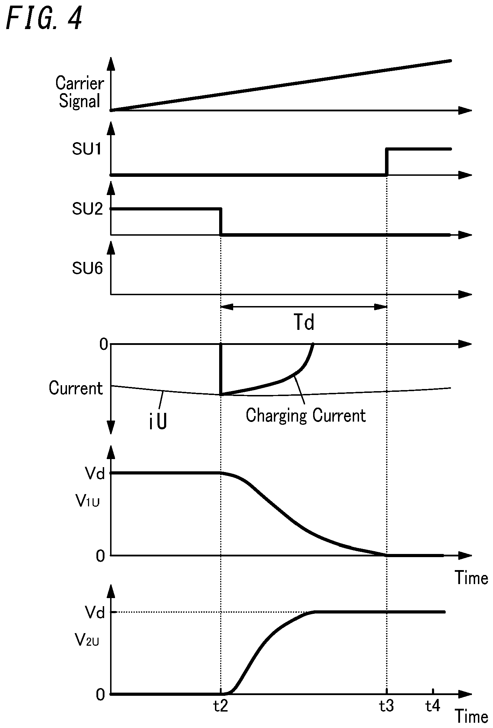

Note that if the polarity of the output current iU is negative as shown in FIG. 4, the power converter 100 may charge the resonant capacitor 9U and make zero-voltage soft switching of the first switching element 1U without turning ON the first IGBT 6U of the bidirectional switch 8U. In FIG. 4, the voltage V_{1U} across the first switching element 1U and the voltage V_{2U} across the second switching element 2U are also shown. In addition, a charging current for the resonant capacitor 9U is also shown in FIG. 4.

The additional time Tav is an amount of time that the controller 50 provides to make the high-level period of the control signal SV6 longer than the dead time Td by setting the beginning t5 of the high-level period of the control signal SV6 at a point in time earlier than the beginning t6 of the dead time Td as shown in FIG. 2. The length of the additional time Tav is determined by the value of the output current iV. To start producing LC resonance from the beginning t6 of the dead time Td, it is preferable that the value of the current iL2 agree with the value of the output current iV at the beginning t6 of the dead time Td. This is because as long as iL2 < iV is satisfied, all current flows through the AC load RA1, and therefore, the resonant capacitor 9V cannot be charged. The end of the high-level period of the control signal SV6 may be simultaneous with, or later than, the end t7 of the dead time Td. In the example shown in FIG. 2, the end of the high-level period of the control signal SV6 is set to be simultaneous with the end t7 of the dead time Td. The controller 50 sets the high-level period of the control signal SV6 at Tav + Td. The voltage V_{1V} across the first switching element 1V goes zero at the end t7 of the dead time Td. In the example shown in FIG. 2, the current iL2 starts flowing through the second resonant inductor L2 at the beginning t5 of the high-level period of the control signal SV6 and goes zero at a time t8 when the additional time Tav has passed since the end t7 of the dead time Td. At this time, the current iL2 satisfies iL2 ≥ iV from the beginning t6 of the dead time Td and on, and therefore, the current iL2 in the hatched part of the current waveform shown as the tenth waveform from the top of FIG. 2 flows into the resonant capacitor 9V to produce the LC resonance. From the end t7 of the dead time Td and on, the current iL2 will be regenerated to the power converter circuit 11 via the third diode 13 directly connected to the second resonant inductor L2.

To start producing the LC resonance at the beginning t6 of the dead time Td as described above, the controller 50 determines the additional time Tav based on the output current iV such that iL2 = iV is satisfied at the beginning t6 of the dead time Td. More specifically, using either the detection result of the output current iV by a current sensor or a signal processing value thereof, or an estimated value of the current iV, the inductance L₂ of the second resonant inductor L2 that has been stored in advance, and the detection result of the voltage across the regenerative capacitor 15 (i.e., the potential V15 at the fourth terminal 154 of the regenerative capacitor 15), for example, the controller 50 determines the additional time Tav by the equation: Tav = iV × (L₂/V15). In this case, as the detection result of the output current iV or the signal processing value thereof, either a detection value at a carrier cycle at which the additional time Tav is added or a detection value at a timing closest to the carrier cycle may be used. Also, in this case, as the estimated value of the output current iV, a value of the output current iV estimated at the carrier cycle at which the additional time Tav is added may be used, for example.

Note that if the polarity of the output current iV is negative, the power converter 100 may charge the resonant capacitor 9V and make zero-voltage soft switching of the first switching element 1 without turning ON the bidirectional switch 8V.

The additional time Taw is an amount of time that the controller 50 provides to make the high-level period of the control signal SW6 longer than the dead time Td by setting the beginning t9 of the high-level period of the control signal SW6 at a point in time earlier than the beginning t10 of the dead time Td as shown in FIG. 3. The length of the additional time Taw is determined by the value of the output current iW. To start producing LC resonance from the beginning t10 of the dead time Td, it is preferable that the value of the current iL3 agree with the value of the output current iW at the beginning t10 of the dead time Td. This is because as long as iL3 < iW is satisfied, all current flows through the AC load RA1, and therefore, the resonant capacitor 9W cannot be charged. The end of the high-level period of the control signal SW6 may be simultaneous with, or later than, the end t11 of the dead time Td. In the example shown in FIG. 3, the end of the high-level period of the control signal SW6 is set to be simultaneous with the end t11 of the dead time Td. The controller 50 sets the high-level period of the control signal SW6 at Taw + Td. The voltage V_{1W} across the first switching element 1W goes zero at the end t11 of the dead time Td. In the example shown in FIG. 3, the current iL3 starts flowing through the third resonant inductor L3 at the beginning t9 of the high-level period of the control signal SW6 and goes zero at a time t12 when the additional time Taw has passed since the end t11 of the dead time Td. At this time, the current iL3 satisfies iL3 ≥ iW from the beginning t10 of the dead time Td and on, and therefore, the current iL3 in the hatched part of the current waveform shown as the fourth waveform from the top of FIG. 3 flows into the resonant capacitor 9W to produce the LC resonance. From the end t11 of the dead time Td and on, the current iL3 will be regenerated to the power converter circuit 11 via the third diode 13 directly connected to the third resonant inductor L3.

The controller 50 determines the additional time Taw based on the output current iW. More specifically, using the detection result of the output current iW by a current sensor, the inductance L₃ of the third resonant inductor L3 that has been stored in advance, and the detection result of the voltage across the regenerative capacitor 15 (i.e., the potential V15 at the fourth terminal 154 of the regenerative capacitor 15), for example, the controller 50 determines the additional time Taw by the equation: Taw = iW × (L₃/V15). In this case, as the detection result of the output current iW or the signal processing value thereof, either a detection value at a carrier cycle at which the additional time Taw is added or a detection value at a timing closest to the carrier cycle may be used. Also, in this case, as the estimated value of the output current iW, a value of the output current iW estimated at the carrier cycle at which the additional time Taw is added may be used, for example.

Note that if the polarity of the output current iW is negative, the power converter 100 may charge the resonant capacitor 9W and make zero-voltage soft switching of the first switching element 1 without turning ON the bidirectional switch 8W.

The power converter 100 causes the resonant capacitor 9 and resonant inductor associated with a switching element as the target of zero-voltage soft switching which belong to the plurality of first switching elements 1 and the plurality of second switching elements 2 to produce resonance. In this case, the voltage across the resonant capacitor 9 associated with the switching element as the target of zero-voltage soft switching varies according to the amplitude of a resonance voltage centered around the potential V15 at the fourth terminal 154 of the regenerative capacitor 15. At this time, the zero-voltage soft switching is done by causing the voltage across the switching element to change from the voltage value Vd (refer to FIGS. 2 and 3) of the DC power supply E1 applied between the first DC terminal 31 and the second DC terminal 32 to zero. In addition, the potential V15 at the fourth terminal 154 of the regenerative capacitor 15 also varies according to the quantity of electric charges stored in, or removed from, the regenerative capacitor 15 every time the resonant capacitor 9 and the resonant inductor produce resonance. Moreover, the potential V15 at the fourth terminal 154 of the regenerative capacitor 15 also varies according to the quantity of electric charges stored in, or removed from, the regenerative capacitor 15 in every carrier cycle. The quantity of electric charges stored in, or removed from, the regenerative capacitor 15 in association with the output currents iU, iV, iW of the U-, V-, and W-phases is determined every carrier cycle. In this case, the quantity of electric charges stored or removed becomes maximum in association with one of the output currents iU, iV, iW of the U-, V-, and W-phases which has the largest absolute value. Thus, in the power converter 100, the quantity of electric charges stored in, or removed from, the regenerative capacitor 15 changes every carrier cycle. If the motor as the AC load RA1 is running properly, the output currents iU, iV, iW in respective phases have sinusoidal waves and their phases are different from each other by 120 degrees, thus striking a charging/discharging balance at the regenerative capacitor 15 and reducing the variation in the potential V15 at the fourth terminal 154 of the regenerative capacitor 15.

The controller 50 performs the first control operation by setting a dead time Td between the high-level period of the PWM signal SU1, SV1, SW1 for the first switching element 1U, 1V, 1W and the high-level period of the PWM signal SU2, SV2, SW2 for the second switching element 2U, 2V, 2W with respect to each of the plurality of switching circuits 10. In addition, the controller 50 also performs the first control operation by causing a high-level period of a control signal for each of the plurality of bidirectional switches 8, corresponding to one of the plurality of switching circuits 10, to overlap with the dead time Td and setting the beginning of the high-level period at a point in time earlier than the beginning of the dead time Td by an additional time.

In the power converter 100, if the controller 50 performed only the first control operation, then any change in the status of the load (such as lock of a motor serving as the AC load RA1) would cause the output currents in the respective phases to have respectively different constant values. Then, in the power converter 100, the difference between the potential V15 at the fourth terminal 154 of the regenerative capacitor 15 with respect to the ground potential and one half (Vd/2) of the voltage value Vd of the DC power supply E1 would widen. In that case, in the power converter 100, when the resonant capacitors 9U, 9V, 9W and the first to third resonant inductors L1-L3 are caused to produce resonance to make zero-voltage soft switching, the amplitude of the resonant voltage would decrease too much to have the zero-voltage soft switching done.

Thus, the controller 50 of the power converter 100 is configured to be able to perform not only the first control operation described above but also the operations to be described below as well.

In the power converter 100, the controller 50 acquires the potential V15 detected at the fourth terminal 154 of the regenerative capacitor 15 with respect to the ground potential. The controller 50 may acquire the detected potential every cycle of the carrier signal, for example. The controller 50 may store in advance the voltage value Vd of the DC voltage applied between the first DC terminal 31 and the second DC terminal 32, for example, or acquire the result of detection of the voltage value Vd, whichever is appropriate. The controller 50 determines the specifics of the control operation based on the detected potential, the value of Vd/2, and the results of detection of the output currents iU, iV, iW.

The controller 50 performs the first control operation if the detected potential of the regenerative capacitor 15 is equal to or greater than a first threshold value Vth1 and equal to or less than a second threshold value Vth2, performs a second control operation if the detected potential of the regenerative capacitor 15 is less than the first threshold value Vth1, and performs a third control operation if the potential detected is greater than the second threshold value Vth2. The first threshold value Vth1 is less than Vd/2. The second threshold value Vth2 is greater than Vd/2. The first threshold value Vth1 may be, for example, 90% of Vd/2. The second threshold value Vth2 may be, for example, 110% of Vd/2. The second control operation is the operation of controlling the plurality of bidirectional switches 8 to raise the potential V15 at the fourth terminal 154 of the regenerative capacitor 15. The third control operation is the operation of controlling the plurality of bidirectional switches 8 to lower the potential V15 at the fourth terminal 154 of the regenerative capacitor 15.

The first control operation is the operation of causing a high-level period of a control signal for each of the plurality of bidirectional switches 8, corresponding to one of the plurality of switching circuits 10, to overlap with the dead time Td and setting the beginning of the high-level period at a point in time earlier than a beginning of the dead time Td by an additional time as described above. The high-level period of the control signal for the bidirectional switch 8U is either a period in which the potential level of the control signal SU6 for the first IGBT 6U has high level or a period in which the potential level of the control signal SU7 for the second IGBT 7U has high level. The high-level period of the control signal for the bidirectional switch 8V is either a period in which the potential level of the control signal SV6 for the first IGBT 6V has high level or a period in which the potential level of the control signal SV7 for the second IGBT 7V has high level. The high-level period of the control signal for the bidirectional switch 8W is either a period in which the potential level of the control signal SW6 for the first IGBT 6W has high level or a period in which the potential level of the control signal SW7 for the second IGBT 7W has high level. The additional time by which the high-level period of the control signal for the bidirectional switch 8U is made to begin earlier than the beginning of the dead time Td is the additional time Tau described above. The additional time by which the high-level period of the control signal for the bidirectional switch 8V is made to begin earlier than the beginning of the dead time Td is the additional time Tav described above. The additional time by which the high-level period of the control signal for the bidirectional switch 8W is made to begin earlier than the beginning of the dead time Td is the additional time Taw described above.

The second control operation is the operation of controlling, according to respective polarities of the plurality of output currents iU, iV, iW supplied from the plurality of AC terminals 41, the plurality of bidirectional switches 8 to raise the potential V15 at the fourth terminal 154 of the regenerative capacitor 15. The third control operation is the operation of controlling, according to the respective polarities of the plurality of output currents iU, iV, iW supplied from the plurality of AC terminals 41, the plurality of bidirectional switches 8 to lower the potential V15 at the fourth terminal 154 of the regenerative capacitor 15.

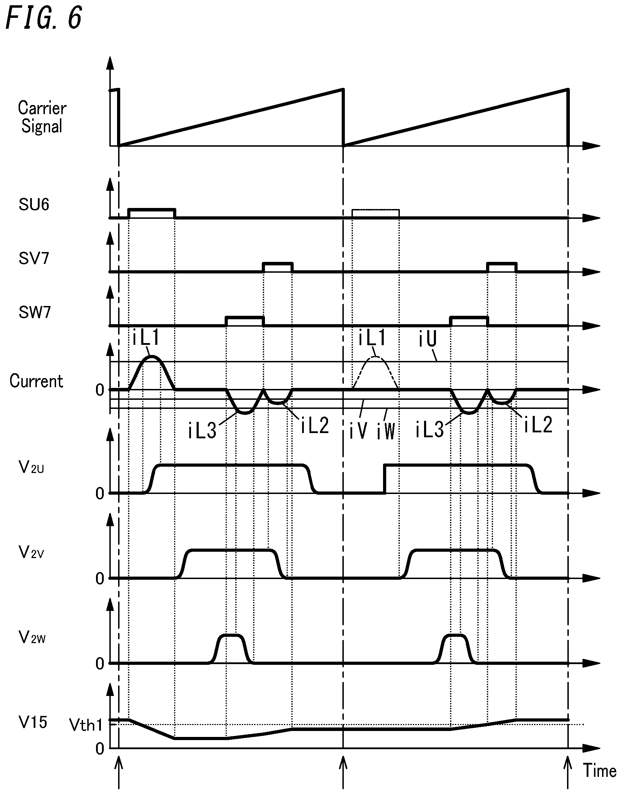

The controller 50 performs the second control operation by setting, according to the respective polarities of the plurality of output currents iU, iV, iW supplied from the plurality of AC terminals 41, the high-level period of one of the plurality of bidirectional switches 8, which participates in the discharging operation of the regenerative capacitor 15, at zero. An exemplary operation in such a situation will be described with reference to FIG. 6.

FIG. 6 shows how the carrier signal, the control signals SU6, SV7, SW7, the plurality of output currents iU, iV, iW, the current iL1 flowing through the first resonant inductor L1, the current iL2 flowing through the second resonant inductor L2, and the current iL3 flowing through the third resonant inductor L3 change in a situation where lock of a motor as an exemplary AC load RA1 causes the output currents iU, iV, iW to have respectively different constant values. In FIG. 6, absolute value of output current iU > absolute value of output current iW > absolute value of output current iV is satisfied. Also, in FIG. 6, high-level period of control signal SU6 > high-level period of control signal SW7 > high-level period of control signal SV7 is satisfied. The larger the absolute value of the output current iU, iV, iW corresponding to the current iL1, iL2, iL3 is, the larger the amplitude of the current iL1, iL2, iL3 is. In addition, the voltages V_{2U}, V_{2V}, V_{2W} across the second switching elements 2U, 2V, 2W and the potential V15 at the fourth terminal 154 of the regenerative capacitor 15 are also shown in FIG. 6. The voltages V_{2U}, V_{2V}, V_{2W} across the second switching elements 2U, 2V, 2W are respectively the same as the voltages across the resonant capacitors 9U, 9V, 9W. Furthermore, in FIG. 6, the timing to acquire the potential V15 at the fourth terminal 154 of the regenerative capacitor 15 every carrier cycle is indicated by the arrows.

In the power converter 100, if the polarities of the output currents iU, iV, iW are positive, negative, and negative, respectively, as shown in FIG. 6, the bidirectional switches 8U, 8V, 8W respectively participate in the discharging operation, charging operation, and charging operation of the regenerative capacitor 15. This allows the controller 50 to set, according to the respective polarities of the output currents iU, iV, iW, the high-level period of a control signal for one bidirectional switch 8, which participates in the discharging operation of the regenerative capacitor 15, out of the plurality of bidirectional switches 8 at zero by performing the second control operation. As shown in FIG. 6, the controller 50 acquires the potential V15 detected at the regenerative capacitor 15 every carrier cycle (i.e., at the timings indicated by the upward arrows shown under the time axis in FIG. 6) and sets, if the detected potential is less than the first threshold value Vth1, the high-level period of the control signal SU6 for the first IGBT 6U, participating in the discharging operation of the regenerative capacitor 15, at zero. As a result, no zero-voltage soft switching involving the discharging operation of the regenerative capacitor 15 is performed to make the potential V15 at the regenerative capacitor 15 in the next carrier cycle greater than the first threshold value Vth1. In FIG. 6, the control signal SU6 before the high-level period is changed into zero and its corresponding current iL1 are indicated by the two-dot chain. In the power converter 100, when the high-level period of the control signal SU6 for the first IGBT 6U goes zero, the voltage V_{2U} across the second switching element 2U rises steeply as shown in FIG. 6. At this time, in the power converter 100, no zero-voltage soft switching of the first switching element 1U is performed but hard switching thereof arises, while the first switching element 1V and the first switching element 1W are soft-switched.

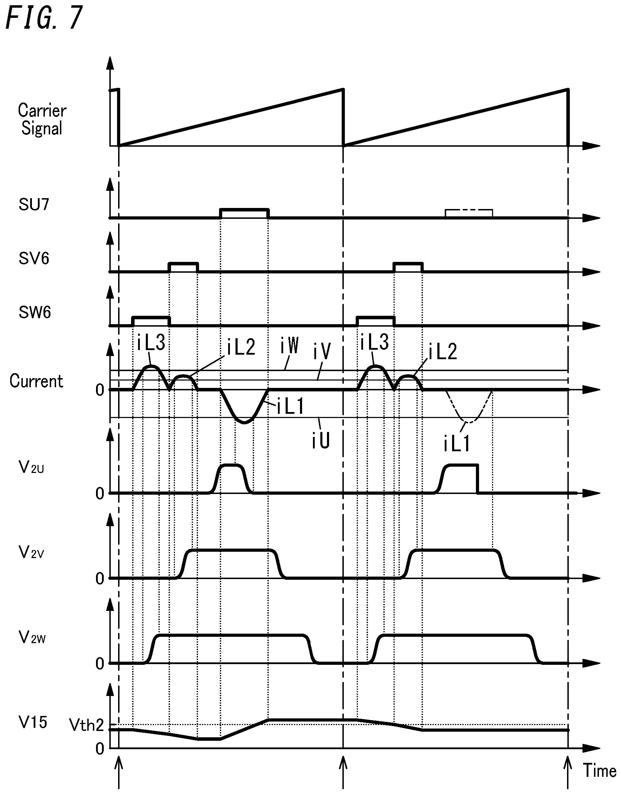

The controller 50 performs the third control operation by setting, according to the respective polarities of the plurality of output currents iU, iV, iW supplied from the plurality of AC terminals 41, a high-level period of one of the plurality of bidirectional switches 8, which participates in a charging operation of the regenerative capacitor 15, at zero. An exemplary operation in such a situation will be described with reference to FIG. 7. FIG. 7 may be interpreted in the same way as in FIG. 6.

In the power converter 100, if the polarities of the output currents iU, iV, iW are negative, positive, and positive, respectively, as shown in FIG. 7, the bidirectional switches 8U, 8V, 8W respectively participate in the charging operation, discharging operation, and discharging operation of the regenerative capacitor 15. This allows the controller 50 to set, according to the respective polarities of the output currents iU, iV, iW, the high-level period of a control signal for one bidirectional switch 8, which participates in the charging operation of the regenerative capacitor 15, out of the plurality of bidirectional switches 8 at zero by performing the third control operation. As shown in FIG. 7, the controller 50 acquires the potential V15 detected at the regenerative capacitor 15 every carrier cycle and sets, if the detected potential is greater than the second threshold value Vth2, the high-level period of the control signal SU7 for the second IGBT 7U, participating in the charging operation of the regenerative capacitor 15, at zero. As a result, no zero-voltage soft switching involving the charging operation of the regenerative capacitor 15 is performed to make the potential V15 at the regenerative capacitor 15 in the next carrier cycle less than the second threshold value Vth2. In FIG. 7, the control signal SU7 before the high-level period is changed into zero and its corresponding current iL1 are indicated by the two-dot chain.

### (4) Recapitulation

In the power converter 100 according to the first embodiment, the controller 50 performs the first control operation including causing a high-level period of a control signal for each of the plurality of bidirectional switches 8, corresponding to one of the plurality of switching circuits 10, to overlap with the dead time Td and setting the beginning of the high-level period at a point in time earlier than the beginning of the dead time Td by an additional time. This allows the power converter 100 to make zero-voltage soft switching on each of the plurality of first switching elements 1 and the plurality of second switching elements 2. In addition, the controller 50 of the power converter 100 acquires a potential detected at the fourth terminal 154 of the regenerative capacitor 15 every carrier cycle. When the detected potential is less than a first threshold value Vth1 that is less than Vd/2, the controller 50 performs the second control operation including raising the potential V15 at the fourth terminal 154 of the regenerative capacitor 15. When the detected potential is greater than a second threshold value Vth2 that is greater than Vd/2, the controller 50 performs the third control operation including lowering the potential V15 at the fourth terminal 154 of the regenerative capacitor 15. This allows the power converter 100 to reduce the variation in the potential V15 at the regenerative capacitor 15 and increase the proportion of soft switching compared to a situation where nothing is performed in response to the variation in the potential V15 at the regenerative capacitor 15, thus contributing to increasing the power conversion efficiency and reducing the noise.

In addition, in the power converter 100 according to the first embodiment, the controller 50 acquires the potential detected at the fourth terminal 154 of the regenerative capacitor 15 every cycle of the carrier signal. The second control operation is the operation of controlling, according to the respective polarities of the plurality of output currents iU, iV, iW supplied from the plurality of AC terminals 41, the plurality of bidirectional switches 8 to raise the potential V15 at the fourth terminal 154 of the regenerative capacitor 15. The third control operation is the operation of controlling, according to the respective polarities of the plurality of output currents iU, iV, iW supplied from the plurality of AC terminals 41, the plurality of bidirectional switches 8 to lower the potential V15 at the fourth terminal 154 of the regenerative capacitor 15. This allows the power converter 100 according to the first embodiment to reduce the variation in the potential at the fourth terminal 154 of the regenerative capacitor 15 more quickly.

In addition, the controller 50 of the power converter 100 according to the first embodiment performs the second control operation by setting, according to the respective polarities of the plurality of output currents iU, iV, iW supplied from the plurality of AC terminals 41, a high-level period of a control signal for one of the plurality of bidirectional switches 8, which participates in a discharging operation of the regenerative capacitor 15, at zero. The controller 50 performs the third control operation by setting, according to the respective polarities of the plurality of output currents iU, iV, iW supplied from the plurality of AC terminals 41, a high-level period of a control signal for one of the plurality of bidirectional switches 8, which participates in a charging operation of the regenerative capacitor 15, at zero. This allows the power converter 100 according to the first embodiment to perform the second and third control operations by making a simple change from the first control operation.

### (Second embodiment)

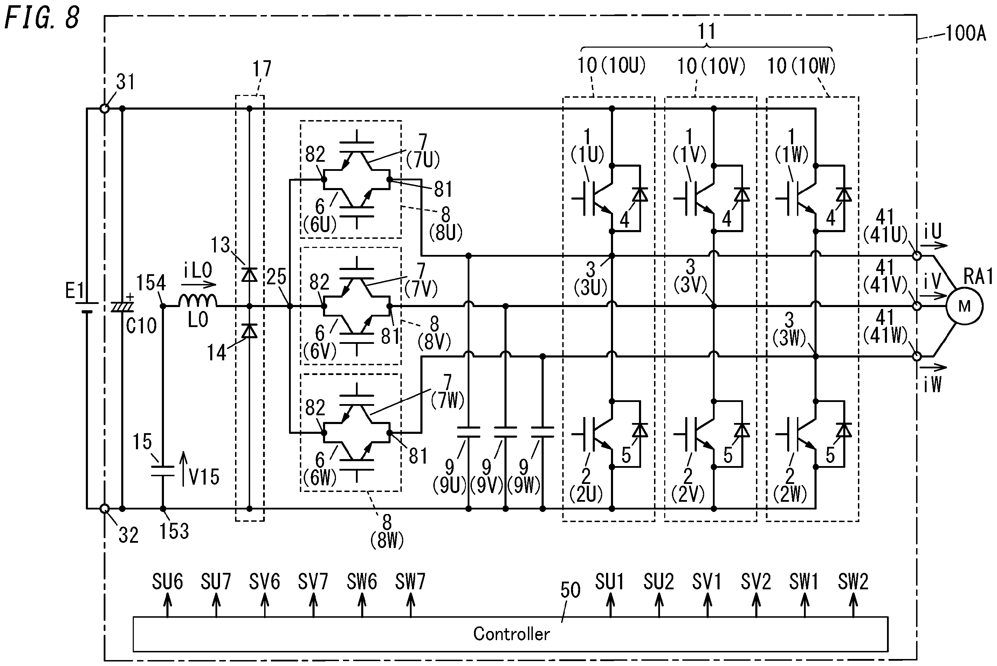

Next, a power converter 100A according to a second embodiment will be described with reference to FIGS. 8-13. In the following description, any constituent element of the power converter 100A according to this second embodiment, having the same function as a counterpart of the power converter 100 according to the first embodiment described above, will be designated by the same reference numeral as that counterpart's, and description thereof will be omitted herein.

### (1) Configuration for power converter

In the power converter 100A according to the second embodiment, the first resonant inductor L1, second resonant inductor L2, and third resonant inductor L3 of the power converter 100 (refer to FIG. 1) according to the first embodiment are implemented as a single resonant inductor L0 as shown in FIG. 8. Thus, in the power converter 100A, the resonant inductor L0 is a resonant inductor for use in common in the plurality of resonant capacitors 9. In the power converter 100A, a resonant circuit for the U-phase is formed by the resonant inductor L0 and the resonant capacitor 9U, a resonant circuit for the V-phase is formed by the resonant inductor L0 and the resonant capacitor 9V, and a resonant circuit for the W-phase is formed by the resonant inductor L0 and the resonant capacitor 9W. From a different perspective, in the power converter 100A, the resonant inductor L0 serves as the first resonant inductor L1, the second resonant inductor L2, and the third resonant inductor L3, thus enabling reducing the number of the resonant inductors provided. In addition, the power converter 100A may also reduce the number of the protection circuits 17 provided.

In the power converter 100A, as in the power converter 100, the plurality of bidirectional switches 8 are provided one to one for the plurality of switching circuits 10. In each of the plurality of bidirectional switches 8, the first terminal 81 thereof is connected to the connection node 3 between the first switching element 1 and second switching element 2 of the switching circuit 10 corresponding to this bidirectional switch 8.

In the power converter 100A, the respective second terminals 82 of the plurality of bidirectional switches 8 are connected to a single common connection node 25.

The resonant inductor L0 has a first terminal and a second terminal. The first terminal of the resonant inductor L0 is connected to the common connection node 25. The regenerative capacitor 15 is connected between the second terminal of the resonant inductor L0 and the second DC terminal 32.

### (2) Operation of power converter

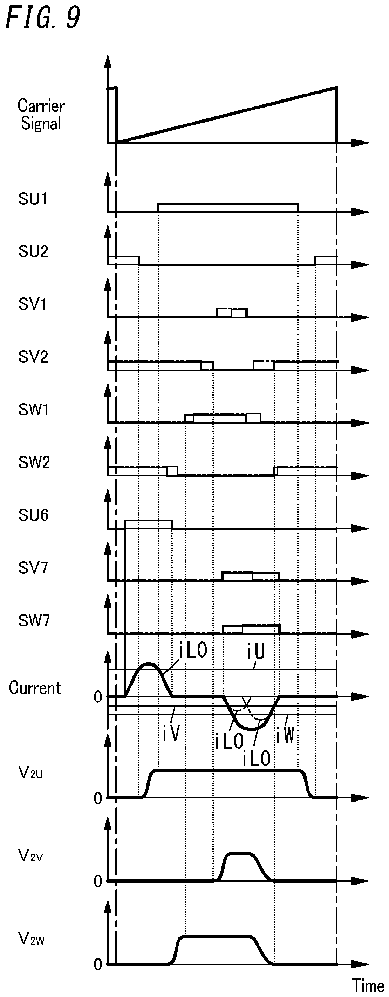

The controller 50 synchronizes, when determining that two-phase resonant currents, corresponding to two switching circuits 10 belonging to the plurality of switching circuits 10, flow simultaneously through the resonant inductor L0 while performing the first control operation, beginnings and ends of respective high-level periods of two control signals for two bidirectional switches 8, respectively corresponding to the two switching circuits 10, out of the plurality of bidirectional switches 8, with each other. In the power converter 100A, if the controller 50 causes the respective high-level periods of two control signals for the two bidirectional switches 8 to overlap with each other, one cycle of LC resonance increases by the factor of √2 and the amount of current flowing through the resonant inductor L0 increases, compared to a situation where the two control signals do not overlap with each other. Thus, the controller 50 synchronizes the beginnings and ends of the high-level periods of the two control signals with each other by extending the respective high-level periods of the two control signals for the two bidirectional switches 8. At this time, to perform zero-voltage soft switching on the two switching circuits 10, the controller 50 determines the high-level periods to increase the dead time by the factor of √2 and to make the additional time equal to the sum of the additional times of two phases. In this case, the controller 50 synchronizes the beginnings and ends of the high-level periods of the two control signals for the two bidirectional switches 8 with each other by performing the control of shifting at least one of the beginnings or ends of the high-level periods of the two control signals for the two bidirectional switches 8 corresponding to the two switching circuits 10. In FIG. 9, the PWM signals SV1, SV2, SW1, SW2 and the control signals SV7, SW7 before the respective high-level periods of the two control signals SV6, SW6 are extended to entirely overlap with each other when the controller 50 determines that the U-phase resonant current and W-phase resonant current flow simultaneously are indicated by the two-dot chain. Also, in FIG. 9, the PWM signals SU1, SU2, SV1, SV2, SW1, SW2 and the control signals SU6, SV7, SW7 when the respective high-level periods of the two control signals SV7, SW7 are extended to entirely overlap with each other are indicated by the solid line. Furthermore, in FIG. 9, a current iL0 flowing in the respective high-level periods of the control signals SV7, SW7 before the control signals SV7, SW7 are caused to entirely overlap with each other is indicated by the two-dot chain, and the current iL0 flowing when the control signals SV7, SW7 are caused to entirely overlap with each other is indicated by the solid line. Note that in FIG. 9, to make the PWM signals and control signals indicated by the two-dot chain easily comparable with the PWM signals and control signals indicated by the solid line, their high-level periods have different potential levels but their potential levels during the high-level periods are actually the same.

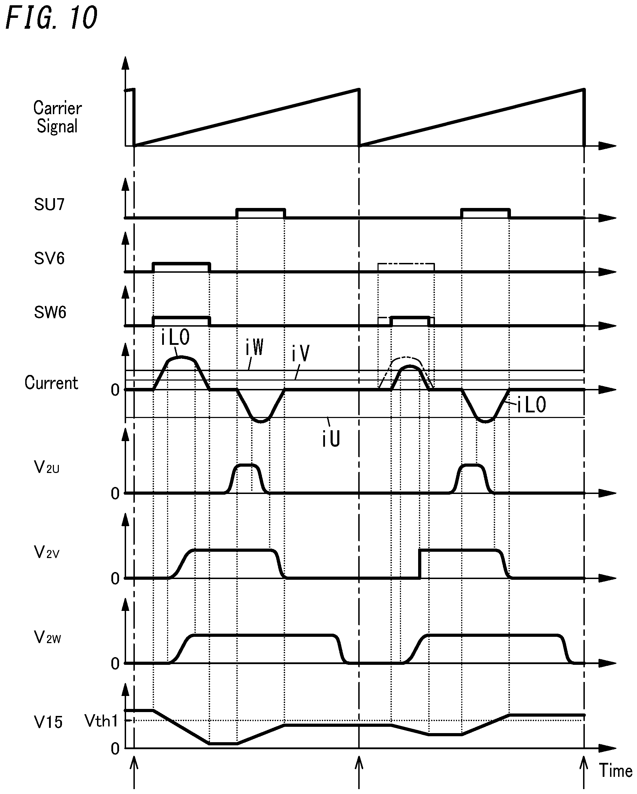

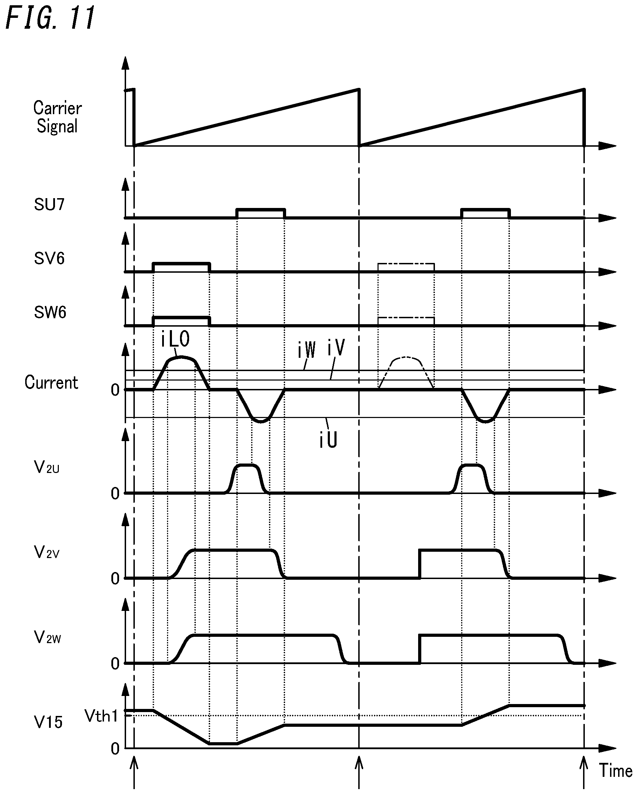

The controller 50 performs the second control operation by setting, according to the respective polarities of the plurality of output currents iU, iV, iW supplied from the plurality of AC terminals 41, a high-level period of a control signal for at least one of two bidirectional switches 8, which participate in the discharging operation of the regenerative capacitor 15, out of the plurality of bidirectional switches 8 at zero. An exemplary operation in such a situation will be described with reference to FIGS. 10 and 11. FIGS. 10 and 11 may be interpreted in the same way as in FIG. 6.

In the power converter 100A, if the polarities of the output currents iU, iV, iW are negative, positive, and positive, respectively, as shown in FIG. 10, the bidirectional switches 8U, 8V, 8W respectively participate in the charging operation, discharging operation, and discharging operation of the regenerative capacitor 15. This allows the controller 50 to set, according to the respective polarities of the output currents iU, iV, iW, the high-level period of a control signal SV6 for one bidirectional switch 8 (bidirectional switch 8V) out of two bidirectional switches 8V, 8W, which participate in the discharging operation of the regenerative capacitor 15, out of the plurality of bidirectional switches 8 at zero by performing the second control operation. As shown in FIG. 10, the controller 50 acquires the potential V15 detected at the regenerative capacitor 15 every carrier cycle and sets, if the detected potential is less than the first threshold value Vth1, the high-level period of the control signal SV6 for the first IGBT 6V, participating in the discharging operation of the regenerative capacitor 15, at zero. In this manner, the high-level period of the control signal SW6 for the first IGBT 6W is shortened. This makes the potential V15 at the regenerative capacitor 15 in the next carrier cycle greater than the first threshold value Vth1. In FIG. 10, the control signal SV6 before the high-level period is changed into zero and its corresponding current iL0 are indicated by the two-dot chain.

In the power converter 100A, if the potential V15 detected at the regenerative capacitor 15 is less than the first threshold value Vth1 and the difference between the detected potential and the first threshold value Vth1 is greater than a predetermined value, then the respective high-level periods of the control signals SV6, SW6 for the first IGBTs 6V, 6W participating in the discharging operation of the regenerative capacitor 15 are set at zero as shown in FIG. 11. This makes the potential V15 at the regenerative capacitor 15 in the next carrier cycle greater than the first threshold value Vth1.

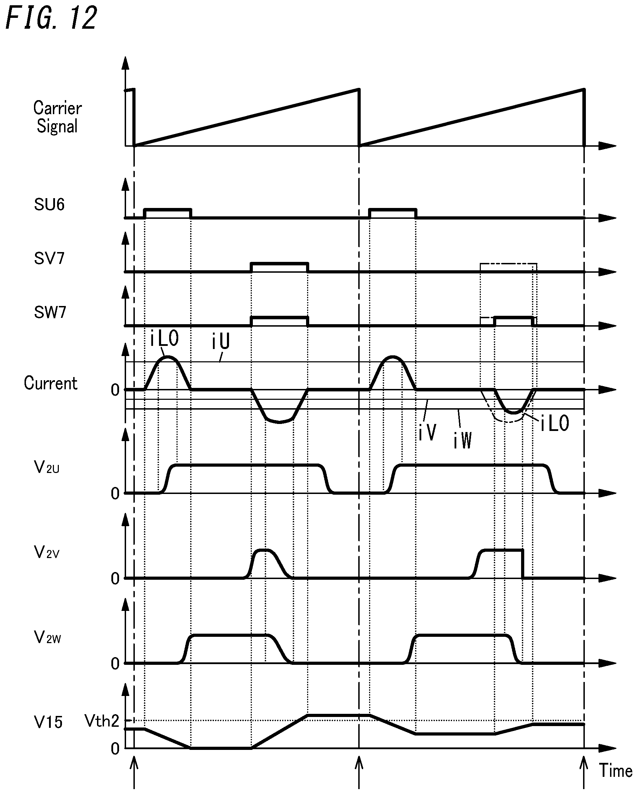

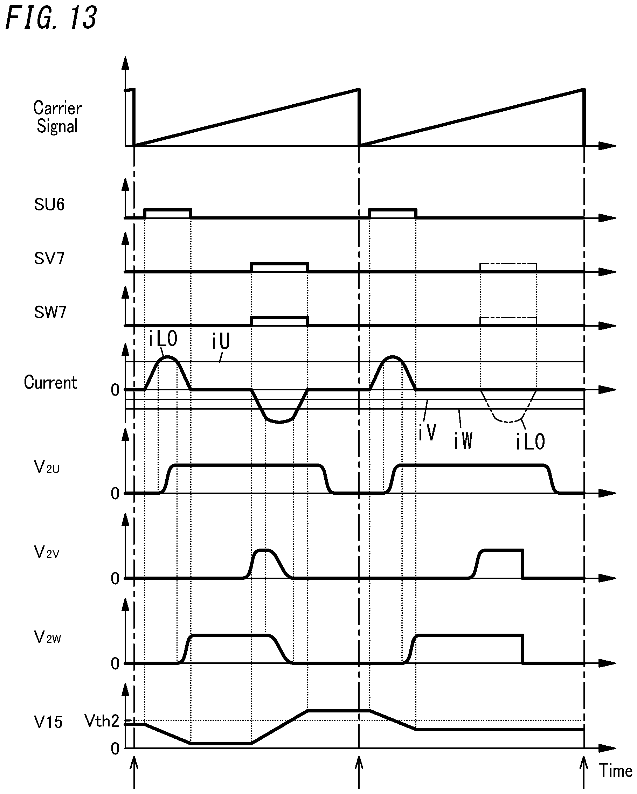

The controller 50 performs the third control operation by setting, according to the respective polarities of the plurality of output currents iU, iV, iW supplied from the plurality of AC terminals 41, a high-level period of a control signal for at least one of the two bidirectional switches 8, which participate in a charging operation of the regenerative capacitor 15, out of the plurality of bidirectional switches 8 at zero. An exemplary operation in such a situation will be described with reference to FIGS. 12 and 13. FIGS. 12 and 13 may be interpreted in the same way as in FIG. 6.

In the power converter 100A, if the polarities of the output currents iU, iV, iW are positive, negative, and negative, respectively, as shown in FIG. 12, the bidirectional switches 8U, 8V, 8W respectively participate in the discharging operation, charging operation, and charging operation of the regenerative capacitor 15. This allows the controller 50 to set, according to the respective polarities of the output currents iU, iV, iW, the high-level period of a control signal SV7 for one bidirectional switch 8 (bidirectional switch 8V) out of the two bidirectional switches 8V, 8W, which participate in the charging operation of the regenerative capacitor 15, out of the plurality of bidirectional switches 8 at zero by performing the second control operation. As shown in FIG. 12, the controller 50 acquires the potential V15 detected at the regenerative capacitor 15 every carrier cycle and sets, if the detected potential is greater than the second threshold value Vth2, the high-level period of the control signal SV7 for the second IGBT 7V, participating in the charging operation of the regenerative capacitor 15, at zero, thereby shortening the high-level period of the control signal SW7 for the second IGBT 7W. This makes the potential V15 at the regenerative capacitor 15 in the next carrier cycle less than the second threshold value Vth2. In FIG. 12, the control signal SV7 before the high-level period is changed into zero and its corresponding current iL0 are indicated by the two-dot chain.

In the power converter 100A, if the potential V15 detected at the regenerative capacitor 15 is greater than the second threshold value Vth2 and the difference between the detected potential and the second threshold value Vth2 is greater than a predetermined value, then the respective high-level periods of the control signals SV7, SW7 for the second IGBTs 7V, 7W participating in the charging operation of the regenerative capacitor 15 are set at zero as shown in FIG. 13. This makes the potential V15 at the regenerative capacitor 15 in the next carrier cycle less than the second threshold value Vth2.

### (3) Recapitulation

In the power converter 100A according to the second embodiment, the controller 50 synchronizes, when determining that two-phase resonant currents flow simultaneously through the resonant inductor L0 while performing the first control operation, beginnings and ends of respective high-level periods of two control signals for two bidirectional switches 8, through which the two-phase resonant currents flow respectively, with each other by extending the high-level periods of the two control signals. This allows the power converter 100A to perform zero-voltage soft switching on each of the plurality of first switching elements 1 and the plurality of second switching elements 2 in the configuration in which only one resonant inductor L0 is provided. In addition, the controller 50 of the power converter 100A performs the second control operation by setting, according to the respective polarities of the plurality of output currents iU, iV, iW, a high-level period of a control signal for at least one of two bidirectional switches 8, which participate in the discharging operation of the regenerative capacitor 15, out of the plurality of bidirectional switches 8 at zero. Furthermore, the controller 50 performs the third control operation by setting, according to the respective polarities of the plurality of output currents iU, iV, iW, a high-level period of a control signal for at least one of two bidirectional switches 8, which participate in a charging operation of the regenerative capacitor 15, out of the plurality of bidirectional switches 8 at zero. This allows the power converter 100A according to the second embodiment to increase the power conversion efficiency and reduce the noise in the configuration in which only one resonant inductor L0 is provided.

### (Third embodiment)

A power converter 100 according to a third embodiment has the same circuit configuration as the power converter 100 (refer to FIG. 1) according to the first embodiment, and therefore, illustration of a circuit diagram thereof will be omitted. It will be described with reference to FIGS. 1, 14, and 15 how the power converter 100 according to the third embodiment operates.

In the power converter 100 according to the third embodiment, the second and third control operations performed by the controller 50 are different from the second and third control operations performed by the controller 50 of the power converter 100 according to the first embodiment.

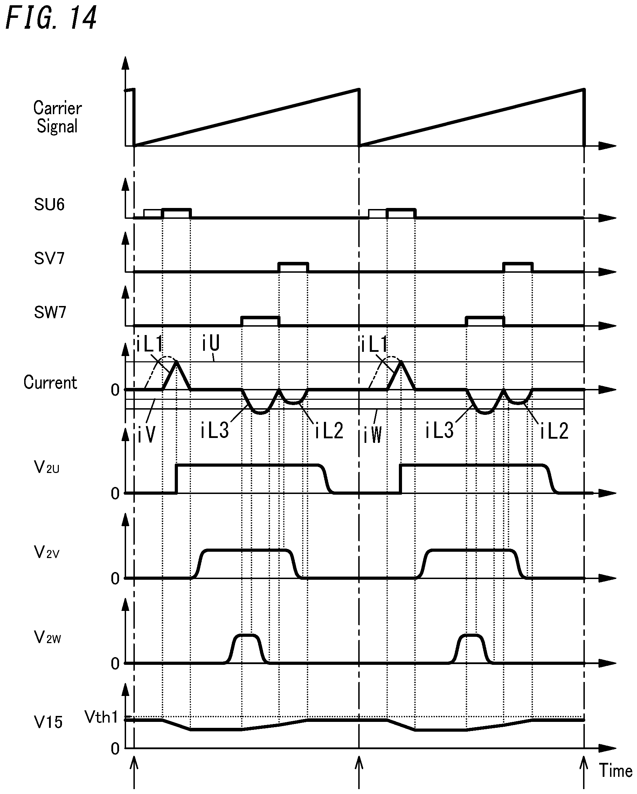

The controller 50 according to this embodiment performs the second control operation by shortening, according to the respective polarities of the plurality of output currents iU, iV, iW, a high-level period of a control signal for a bidirectional switch 8, which participates in a discharging operation of the regenerative capacitor 15, out of the plurality of bidirectional switches 8 to make an integrated value of a current flowing through the regenerative capacitor 15 in one cycle of a carrier signal equal to zero. An exemplary operation in such a situation will be described with reference to FIG. 14. FIG. 14 may be interpreted in the same way as in FIG. 6.

In the power converter 100 according to the third embodiment, if the polarities of the output currents iU, iV, iW are positive, negative, and negative, respectively, as shown in FIG. 14, the bidirectional switches 8U, 8V, 8W respectively participate in the discharging operation, charging operation, and charging operation of the regenerative capacitor 15. This allows the controller 50 to shorten, according to the respective polarities of the output currents iU, iV, iW, the high-level period of a control signal SU6 for one bidirectional switch 8U, which participates in the discharging operation of the regenerative capacitor 15, out of the plurality of bidirectional switches 8 by performing the second control operation. As shown in FIG. 14, the controller 50 acquires the potential V15 detected at the regenerative capacitor 15 every carrier cycle and shortens, if the detected potential is less than the first threshold value Vth1, the high-level period of the control signal SU6 for the first IGBT 6U, participating in the discharging operation of the regenerative capacitor 15. The shortened high-level period of the control signal SU6 is a period longer than zero.

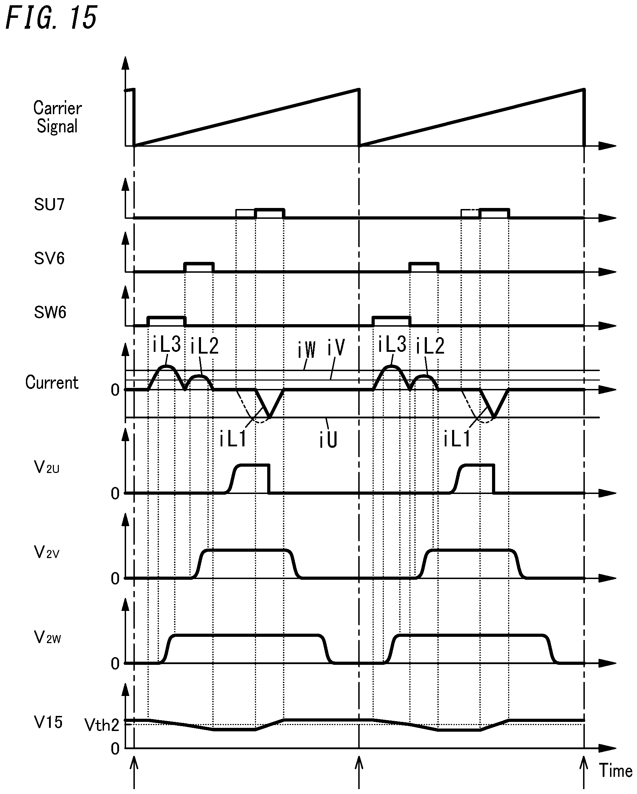

The controller 50 according to this embodiment performs the third control operation by shortening, according to the respective polarities of the plurality of output currents iU, iV, iW, a high-level period of a control signal for a bidirectional switch 8, which participates in a charging operation of the regenerative capacitor 15, out of the plurality of bidirectional switches 8 to make the integrated value of the current flowing through the regenerative capacitor 15 in one cycle of the carrier signal equal to zero. An exemplary operation in such a situation will be described with reference to FIG. 15. FIG. 15 may be interpreted in the same way as in FIG. 6.

In the power converter 100 according to the third embodiment, if the polarities of the output currents iU, iV, iW are negative, positive, and positive, respectively, as shown in FIG. 15, the bidirectional switches 8U, 8V, 8W respectively participate in the charging operation, discharging operation, and discharging operation of the regenerative capacitor 15. This allows the controller 50 to shorten, according to the respective polarities of the output currents iU, iV, iW, the high-level period of a control signal SU7 for one bidirectional switch 8U, which participates in the charging operation of the regenerative capacitor 15, out of the plurality of bidirectional switches 8 by performing the third control operation. As shown in FIG. 15, the controller 50 acquires the potential V15 detected at the regenerative capacitor 15 every carrier cycle and shortens, if the detected potential is greater than the second threshold value Vth2, the high-level period of the control signal SU7 for the second IGBT 7U, participating in the charging operation of the regenerative capacitor 15 to a period longer than zero. The shortened high-level period of the control signal SU7 is a period longer than zero.

The power converter 100 according to the third embodiment may reduce the chances of causing ripples in the output current while performing the second and third control operations compared to the power converter 100 according to the first embodiment. **In** addition, the power converter 100 according to the third embodiment may also cut down the switching loss involved with the second and third control operations compared to the power converter 100 according to the first embodiment, thus enabling further increasing the power conversion efficiency.

### (Fourth embodiment)

A power converter 100A according to a fourth embodiment has the same circuit configuration as the power converter 100A (refer to FIG. 8) according to the second embodiment, and therefore, illustration of a circuit diagram thereof will be omitted. It will be described with reference to FIGS. 8, 16, and 17 how the power converter 100A according to the fourth embodiment operates.

**In** the power converter 100A according to the fourth embodiment, the second and third control operations performed by the controller 50 are different from the second and third control operations performed by the controller 50 of the power converter 100A according to the second embodiment.

The controller 50 of the power converter 100A according to the fourth embodiment synchronizes, when determining that two-phase resonant currents, corresponding to two switching circuits 10 belonging to the plurality of switching circuits 10, flow simultaneously through the resonant inductor L0 while performing the first control operation, beginnings and ends of respective high-level periods of two control signals for two bidirectional switches 8, respectively corresponding to the two switching circuits 10, out of the plurality of bidirectional switches 8, with each other by extending the high-level periods of the two control signals.

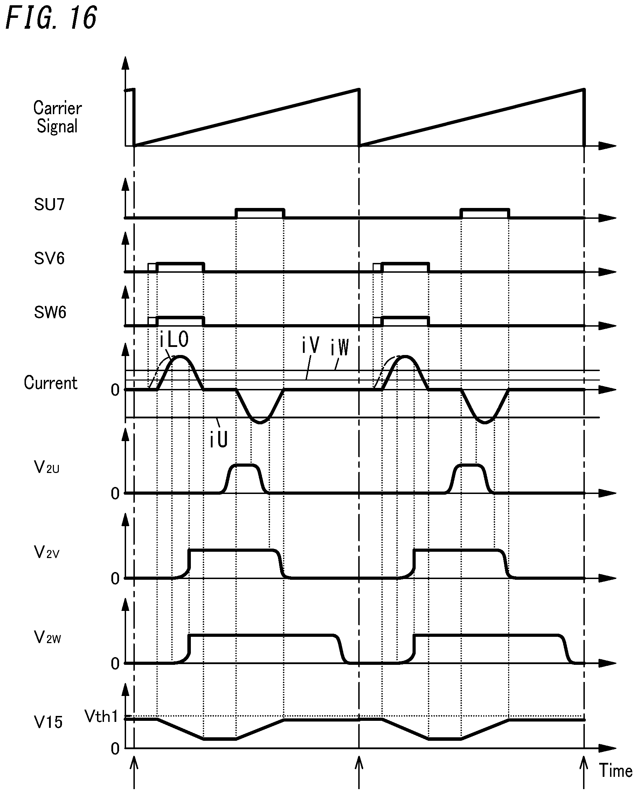

The controller 50 according to this embodiment performs the second control operation by shortening, according to the respective polarities of the plurality of output currents iU, iV, iW, high-level periods of control signals for two bidirectional switches 8, which participate in the charging operation of the regenerative capacitor 15, out of the plurality of bidirectional switches 8. An exemplary operation in such a situation will be described with reference to FIG. 16. FIG. 16 may be interpreted in the same way as in FIG. 6.

**In** the power converter 100 according to the fourth embodiment, if the polarities of the output currents iU, iV, iW are negative, positive, and positive, respectively, as shown in FIG. 16, the bidirectional switches 8U, 8V, 8W respectively participate in the charging operation, discharging operation, and discharging operation of the regenerative capacitor 15. This allows the controller 50 to shorten, according to the respective polarities of the output currents iU, iV, iW, the high-level periods of control signals SV6, SW6 for bidirectional switches 8V, 8W, respectively, which participate in the discharging operation of the regenerative capacitor 15, out of the plurality of bidirectional switches 8 by performing the second control operation. As shown in FIG. 16, the controller 50 acquires the potential V15 detected at the regenerative capacitor 15 every carrier cycle and shortens, if the detected potential is less than the first threshold value Vth1, the high-level periods of the control signals SV6, SW6 for the first IGBTs 6V, 6W, participating in the discharging operation of the regenerative capacitor 15, by the same amount of time. The shortened high-level periods of the control signals SV6, SW6 are periods longer than zero.

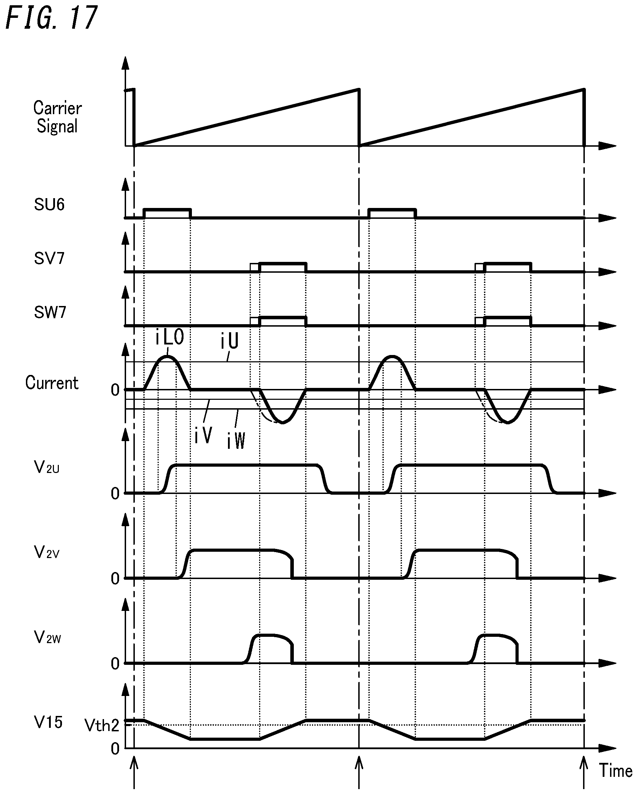

The controller 50 according to this embodiment performs the third control operation by shortening, according to the respective polarities of the plurality of output currents iU, iV, iW, high-level periods of control signals for two bidirectional switches 8, which participate in the charging operation of the regenerative capacitor 15, out of the plurality of bidirectional switches 8. An exemplary operation in such a situation will be described with reference to FIG. 17. FIG. 17 may be interpreted in the same way as in FIG. 6.

**In** the power converter 100 according to the fourth embodiment, if the polarities of the output currents iU, iV, iW are positive, negative, and negative, respectively, as shown in FIG. 17, the bidirectional switches 8U, 8V, 8W respectively participate in the discharging operation, charging operation, and charging operation of the regenerative capacitor 15. This allows the controller 50 to shorten, according to the respective polarities of the output currents iU, iV, iW, the high-level periods of control signals SV7, SW7 for bidirectional switches 8V, 8W, respectively, which participate in the charging operation of the regenerative capacitor 15, out of the plurality of bidirectional switches 8 by performing the third control operation. As shown in FIG. 17, the controller 50 acquires the potential V15 detected at the regenerative capacitor 15 every carrier cycle and shortens, if the detected potential is greater than the second threshold value Vth2, the high-level periods of the control signals SV7, SW7 for the second IGBTs 7V, 7W, participating in the discharging operation of the regenerative capacitor 15, by the same amount of time. The shortened high-level periods of the control signals SV7, SW7 are periods longer than zero.

The power converter 100A according to the fourth embodiment may reduce the chances of causing ripples in the output current while performing the second and third control operations compared to the power converter 100A according to the second embodiment. **In** addition, the power converter 100A according to the fourth embodiment may also cut down the switching loss involved with the second and third control operations compared to the power converter 100A according to the second embodiment, thus enabling further increasing the power conversion efficiency.

### (Fifth embodiment)

A power converter 100 according to a fifth embodiment has the same circuit configuration as the power converter 100 (refer to FIG. 1) according to the first embodiment, and therefore, illustration of a circuit diagram thereof will be omitted. It will be described with reference to FIGS. 1, 18, and 19 how the power converter 100 according to the fifth embodiment operates.

In the power converter 100 according to the fifth embodiment, the second and third control operations performed by the controller 50 are different from the second and third control operations performed by the controller 50 of the power converter 100 according to the first embodiment.

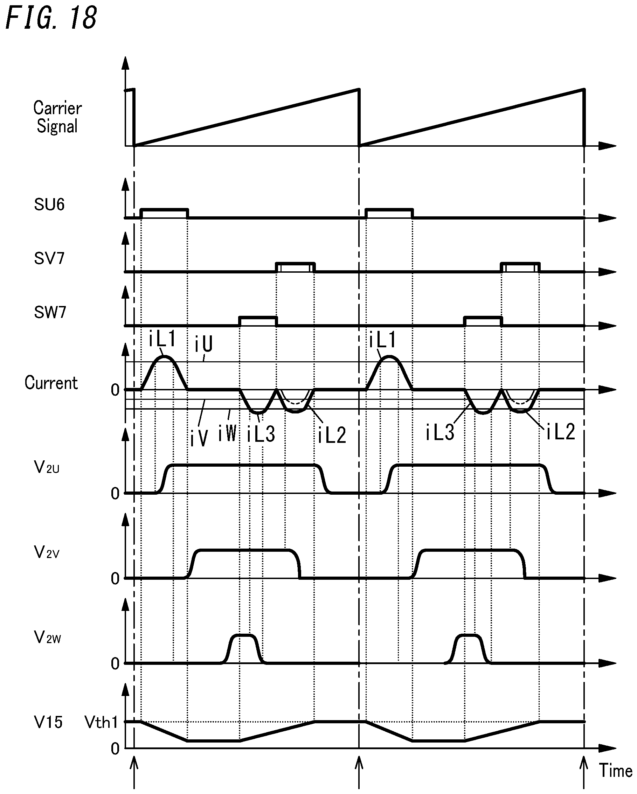

The controller 50 according to this embodiment performs the second control operation by extending, according to the respective polarities of the plurality of output currents iU, iV, iW, a high-level period of a control signal for a bidirectional switch 8, which participates in a charging operation of the regenerative capacitor 15, out of the plurality of bidirectional switches 8 to make an integrated value of a current flowing through the regenerative capacitor 15 in one cycle of a carrier signal equal to zero. An exemplary operation in such a situation will be described with reference to FIG. 18. FIG. 18 may be interpreted in the same way as in FIG. 6.

In the power converter 100 according to the fifth embodiment, if the polarities of the output currents iU, iV, iW are positive, negative, and negative, respectively, as shown in FIG. 18, the bidirectional switches 8U, 8V, 8W respectively participate in the discharging operation, charging operation, and charging operation of the regenerative capacitor 15. This allows the controller 50 to extend, according to the respective polarities of the output currents iU, iV, iW, the shortest high-level period of a control signal (i.e., the control signal SV7 in FIG. 18) out of the control signals for bidirectional switches 8, which participate in the charging operation of the regenerative capacitor 15, out of the plurality of bidirectional switches 8 to make an integrated value of a current flowing through the regenerative capacitor 15 in one cycle of a carrier signal equal to zero by performing the second control operation. As shown in FIG. 18, the controller 50 acquires the potential V15 detected at the regenerative capacitor 15 every carrier cycle and extends, if the detected potential is less than the first threshold value Vth1, the high-level period of the control signal SV7 for the second IGBT 7V, participating in the charging operation of the regenerative capacitor 15. When extending the high-level period of the control signal SV7, the controller 50 sets the beginning of the high-level period at an earlier point in time and sets the end of the high-level period at a later point in time.

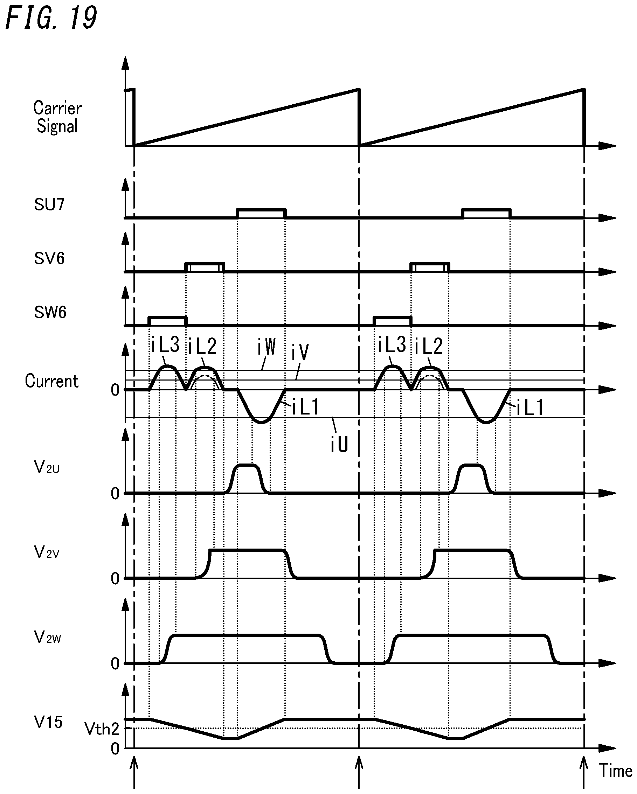

The controller 50 according to this embodiment performs the third control operation by extending, according to the respective polarities of the plurality of output currents iU, iV, iW, a high-level period of a control signal for a bidirectional switch 8, which participates in a discharging operation of the regenerative capacitor 15, out of the plurality of bidirectional switches 8 to make the integrated value of the current flowing through the regenerative capacitor 15 in one cycle of the carrier signal equal to zero. An exemplary operation in such a situation will be described with reference to FIG. 19. FIG. 19 may be interpreted in the same way as in FIG. 6.

In the power converter 100 according to the fifth embodiment, if the polarities of the output currents iU, iV, iW are negative, positive, and positive, respectively, as shown in FIG. 19, the bidirectional switches 8U, 8V, 8W respectively participate in the charging operation, discharging operation, and discharging operation of the regenerative capacitor 15. This allows the controller 50 to extend, according to the respective polarities of the output currents iU, iV, iW, the shortest high-level period of a control signal (i.e., the control signal SV6 in FIG. 19) out of the control signals for bidirectional switches 8, which participate in the discharging operation of the regenerative capacitor 15, out of the plurality of bidirectional switches 8 to make an integrated value of a current flowing through the regenerative capacitor 15 in one cycle of a carrier signal equal to zero by performing the third control operation. As shown in FIG. 19, the controller 50 acquires the potential V15 detected at the regenerative capacitor 15 every carrier cycle and extends, if the detected potential is greater than the second threshold value Vth2, the high-level period of the control signal SV6 for the first IGBT 6V, participating in the discharging operation of the regenerative capacitor 15. When extending the high-level period of the control signal SV6, the controller 50 sets the beginning of the high-level period at an earlier point in time and sets the end of the high-level period at a later point in time.

The power converter 100 according to the fifth embodiment may reduce the chances of causing ripples in the output current while performing the second and third control operations compared to the power converter 100 according to the first embodiment. In addition, the power converter 100 according to the fifth embodiment may also cut down the switching loss involved with the second and third control operations compared to the power converter 100 according to the first embodiment, thus enabling further increasing the power conversion efficiency.

### (Sixth embodiment)

A power converter 100A according to a sixth embodiment has the same circuit configuration as the power converter 100A (refer to FIG. 8) according to the second embodiment, and therefore, illustration of a circuit diagram thereof will be omitted. It will be described with reference to FIGS. 8, 20, and 21 how the power converter 100A according to the sixth embodiment operates.

In the power converter 100A according to the sixth embodiment, the second and third control operations performed by the controller 50 thereof are different from the second and third control operations performed by the controller 50 of the power converter 100A according to the second embodiment.

The controller 50 according to this embodiment synchronizes, when determining that two-phase resonant currents, corresponding to two switching circuits 10 belonging to the plurality of switching circuits 10, flow simultaneously through the resonant inductor L0 while performing the first control operation, beginnings and ends of respective high-level periods of two control signals for two bidirectional switches 8, respectively corresponding to the two switching circuits 10, out of the plurality of bidirectional switches 8, with each other by extending the high-level periods of the two control signals.

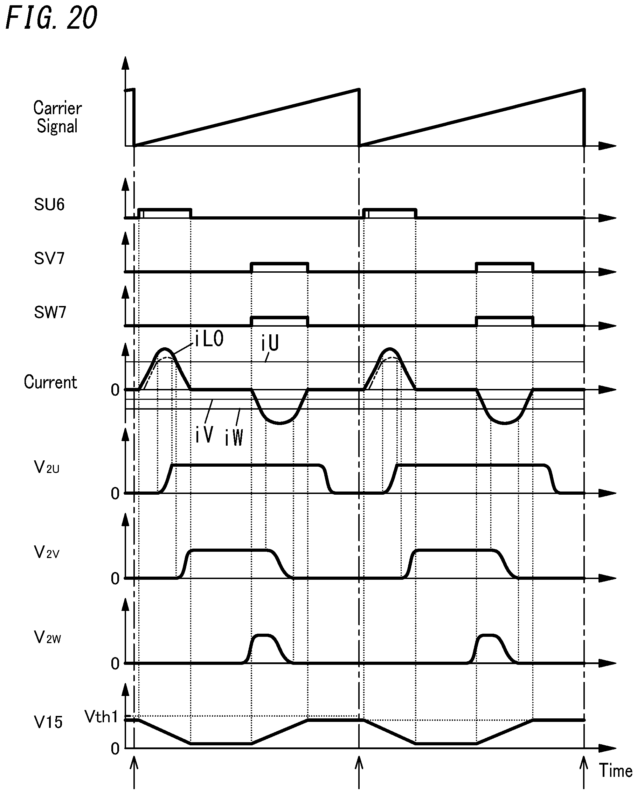

The controller 50 according to this embodiment performs the second control operation by extending a high-level period of a control signal for a bidirectional switch 8, which is different from the two bidirectional switches 8, to make an integrated value of a current flowing through the regenerative capacitor 15 in one cycle of a carrier signal equal to zero. An exemplary operation in such a situation will be described with reference to FIG. 20. FIG. 20 may be interpreted in the same way as in FIG. 6.

In the power converter 100A according to the sixth embodiment, if the polarities of the output currents iU, iV, iW are positive, negative, and negative, respectively, as shown in FIG. 20, the bidirectional switches 8U, 8V, 8W respectively participate in the discharging operation, charging operation, and charging operation of the regenerative capacitor 15. As shown in FIG. 20, the controller 50 acquires the potential V15 detected at the regenerative capacitor 15 every carrier cycle and extends, if the detected potential is less than the first threshold value Vth1, the high-level period of the control signal SU6 for the first IGBT 6U of the bidirectional switch 8U different from the two bidirectional switches 8V, 8W, of which the high-level periods are to overlap with each other. When extending the high-level period of the control signal SU6, the controller 50 sets the beginning of the high-level period at an earlier point in time.

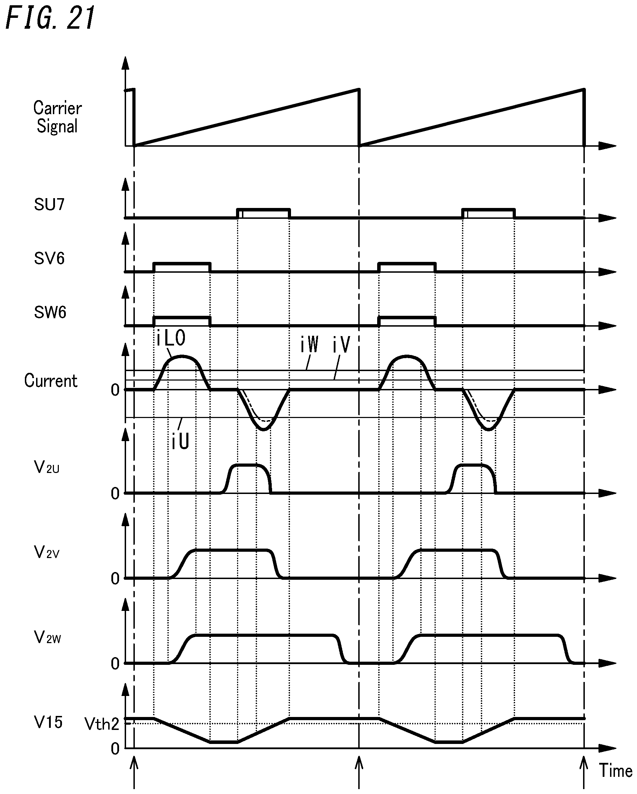

The controller 50 according to this embodiment performs the third control operation by extending a high-level period of a control signal for a bidirectional switch 8, which is different from the two bidirectional switches 8, to make an integrated value of a current flowing through the regenerative capacitor 15 in one cycle of a carrier signal equal to zero. An exemplary operation in such a situation will be described with reference to FIG. 21. FIG. 21 may be interpreted in the same way as in FIG. 6.

In the power converter 100A according to the sixth embodiment, if the polarities of the output currents iU, iV, iW are negative, positive, and positive, respectively, as shown in FIG. 21, the bidirectional switches 8U, 8V, 8W respectively participate in the charging operation, discharging operation, and discharging operation of the regenerative capacitor 15. As shown in FIG. 21, the controller 50 acquires the potential V15 detected at the regenerative capacitor 15 every carrier cycle and extends, if the detected potential is greater than the second threshold value Vth2, the high-level period of the control signal SU7 for the second IGBT 7U of the bidirectional switch 8U different from the two bidirectional switches 8V, 8W, of which the high-level periods are to overlap with each other. When extending the high-level period, the controller 50 sets the beginning of the high-level period at an earlier point in time.

The power converter 100A according to the sixth embodiment may cut down the switching loss involved with the second and third control operations compared to the power converter 100A according to the second embodiment, thus enabling further increasing the power conversion efficiency.

### (Seventh embodiment)

A power converter 100 according to a seventh embodiment has the same circuit configuration as the power converter 100 (refer to FIG. 1) according to the first embodiment, and therefore, illustration of a circuit diagram thereof will be omitted. It will be described with reference to FIGS. 1, 22, and 23 how the power converter 100 according to the seventh embodiment operates.

In the power converter 100 according to the seventh embodiment, the second and third control operations performed by the controller 50 thereof are different from the second and third control operations performed by the controller 50 of the power converter 100 according to the first embodiment.

The controller 50 performs the first control operation by setting, with respect to each of the plurality of switching circuits 10, a dead time Td between a high-level period of the PWM signal SU1, SV1, SW1 for the first switching element 1 and a high-level period of the PWM signal SU2, SV2, SW2 for the second switching element 2. The first control operation further includes causing a high-level period of a control signal for each of the plurality of bidirectional switches 8, corresponding to one of the plurality of switching circuits 10, to overlap with the dead time Td and setting the beginning of the high-level period at a point in time earlier than the beginning of the dead time by an additional time.

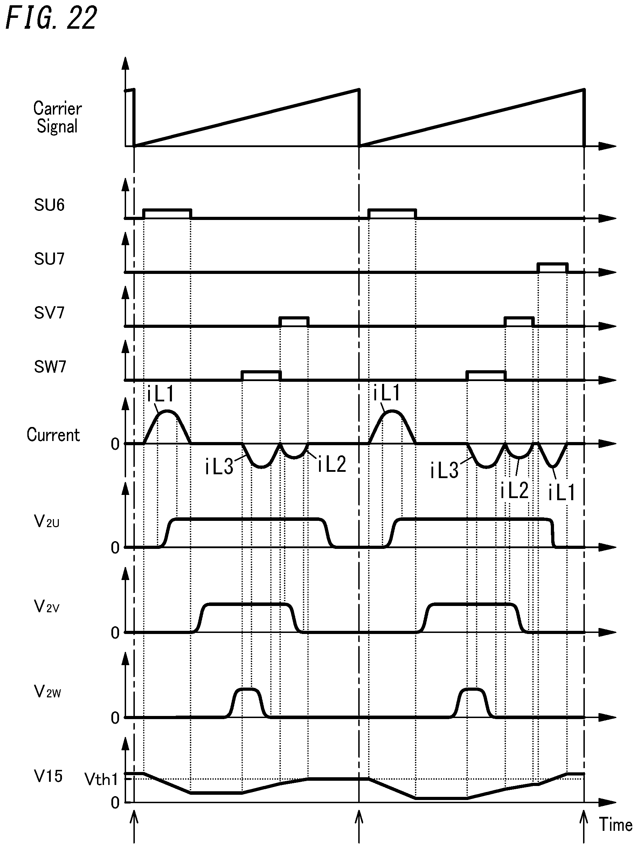

The controller 50 performs the second control operation by acquiring a potential detected at the fourth terminal 154 of the regenerative capacitor 15 every cycle of a carrier signal. If the detected potential is less than the first threshold value Vth1, the controller 50 applies, according to respective polarities of a plurality of output currents iU, iV, iW, a control signal having a high-level period, associated with a charging operation of the regenerative capacitor 15, to one bidirectional switch 8 belonging to the plurality of bidirectional switches 8 besides applying a control signal, having a high-level period overlapping with the dead time Td, to the one bidirectional switch 8 in one cycle of a carrier signal. An exemplary operation in such a situation will be described with reference to FIG. 22. FIG. 22 may be interpreted in the same way as in FIG. 6.

**In** the example shown in FIG. 22, the controller 50 acquires a detected potential of the potential V15 at the regenerative capacitor 15 every carrier cycle. If the detected potential is less than the first threshold value Vth1, the controller 50 applies a control signal SU7 having a high-level period, associated with a charging operation of the regenerative capacitor 15, to the bidirectional switch 8U separately from a control signal SU6 having a high-level period overlapping with the dead time Td.

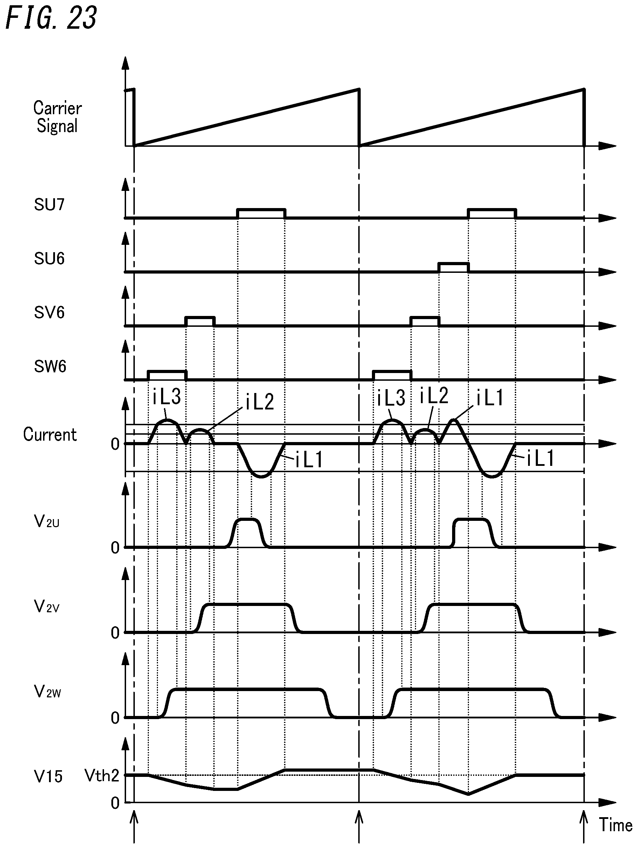

If the detected potential is greater than a second threshold value Vth2, the controller 50 performs the third control operation by applying, according to respective polarities of a plurality of output currents iU, iV, iW, a control signal having a high-level period, associated with a discharging operation of the regenerative capacitor 15, to one bidirectional switch 8 belonging to the plurality of bidirectional switches 8 besides applying the control signal, having the high-level period overlapping with the dead time Td, to the one bidirectional switch 8 in one cycle of the carrier signal. An exemplary operation in such a situation will be described with reference to FIG. 23. FIG. 23 may be interpreted in the same way as in FIG. 6.

In the example shown in FIG. 23, the controller 50 acquires a detected potential of the potential V15 at the regenerative capacitor 15 every carrier cycle. If the detected potential is less than the second threshold value Vth2, the controller 50 applies a control signal SU6 having a high-level period, associated with a discharging operation of the regenerative capacitor 15, to the bidirectional switch 8U separately from a control signal SU7 having a high-level period overlapping with the dead time Td.

In the power converter 100 according to the seventh embodiment, the controller 50 performs the first control operation including causing a high-level period of a control signal for each of the plurality of bidirectional switches 8, corresponding to one of the plurality of switching circuits 10, to overlap with the dead time Td and setting the beginning of the high-level period at a point in time earlier than the beginning of the dead time Td by an additional time. This allows the power converter 100 to perform zero-voltage soft switching on each of the plurality of first switching elements 1 and the plurality of second switching elements 2. **In** addition, the controller 50 of the power converter 100 acquires a potential detected at the fourth terminal 154 of the regenerative capacitor 15 every carrier cycle. If the detected potential is less than a first threshold value Vth1 that is less than Vd/2, the controller 50 of the power converter 100 performs the second control operation including raising the potential V15 at the fourth terminal 154 of the regenerative capacitor 15. If the detected potential is greater than a second threshold value Vth2 that is greater than Vd/2, the controller 50 of the power converter 100 performs the third control operation including lowering the potential V15 at the fourth terminal 154 of the regenerative capacitor 15. This allows the power converter 100 to reduce the variation in the potential V15 at the regenerative capacitor 15 and increase the proportion of soft switching compared to a situation where nothing is performed in response to the variation in the potential V15 at the regenerative capacitor 15, thus eventually contributing to increasing the power conversion efficiency and reducing the noise.

In addition, in the power converter 100 according to the seventh embodiment, the controller 50 acquires the potential detected at the fourth terminal 154 of the regenerative capacitor 15 every cycle of the carrier signal. The second control operation performed by the controller 50 is the operation of controlling, according to the respective polarities of the plurality of output currents iU, iV, iW supplied from the plurality of AC terminals 41, the plurality of bidirectional switches 8 to raise the potential V15 at the fourth terminal 154 of the regenerative capacitor 15. The third control operation performed by the controller 50 is the operation of controlling, according to the respective polarities of the plurality of output currents iU, iV, iW supplied from the plurality of AC terminals 41, the plurality of bidirectional switches 8 to lower the potential V15 at the fourth terminal 154 of the regenerative capacitor 15. This allows the power converter 100 according to the seventh embodiment to reduce the variation in the potential at the fourth terminal 154 of the regenerative capacitor 15 more quickly.

Furthermore, the controller 50 of the power converter 100 according to the seventh embodiment may perform each of the second and third control operations simply by adding a control signal compared to the case of performing the first control operation, and therefore, may perform the second and third control operations by making a simple change from the first control operation.

### (Eighth embodiment)

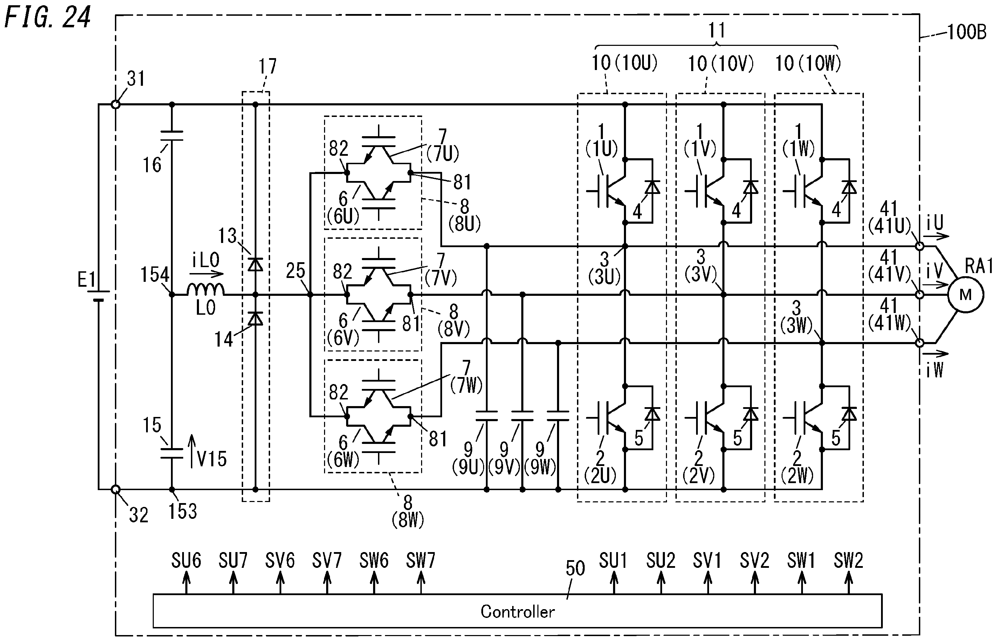

Next, a power converter 100B according to an eighth embodiment will be described with reference to FIG. 24. The power converter 100B according to the eighth embodiment further includes a capacitor 16 connected between the second terminal of the resonant inductor L0 and the first DC terminal 31, which is a difference from the power converter 100A (refer to FIG. 8) according to the second embodiment. In the following description, any constituent element of the power converter 100B according to the eighth embodiment, having the same function as a counterpart of the power converter 100A according to the second embodiment described above, will be designated by the same reference numeral as that counterpart's, and description thereof will be omitted herein.

The power converter 100B does not include the capacitor C10 of the power converter 100A according to the second embodiment. The capacitor 16 is connected to the regenerative capacitor 15 in series. Thus, in this power converter 100B, a series circuit of the capacitor 16 and the regenerative capacitor 15 is connected between the first DC terminal 31 and the second DC terminal 32. The capacitance of the capacitor 16 is the same as the capacitance of the regenerative capacitor 15. As used herein, the expression "the capacitance of the capacitor 16 is the same as the capacitance of the regenerative capacitor 15" refers to not only a situation where the capacitance of the capacitor 16 is exactly equal to the capacitance of the regenerative capacitor 15 but also a situation where the capacitance of the capacitor 16 is equal to or greater than 95% and equal to or less than 105% of the capacitance of the regenerative capacitor 15.

In the power converter 100B according to the eighth embodiment, the potential V15 at the fourth terminal 154 of the regenerative capacitor 15 has a value calculated by dividing the voltage value Vd of the DC power supply E1 by two that is the number of the capacitors, namely, the capacitor 16 and the regenerative capacitor 15. Thus, the potential V15 at the fourth terminal 154 of the regenerative capacitor 15 is Vd/2. In the power converter 100B according to the eighth embodiment, the controller 50 may store in advance the value of the potential V15 at the fourth terminal 154 of the regenerative capacitor 15.

The controller 50 of the power converter 100B according to the eighth embodiment, as well as the controller 50 of the power converter 100A according to the second embodiment, performs the first control operation, the second control operation, and the third control operation. Thus, the power converter 100B according to the eighth embodiment, as well as the power converter 100A according to the second embodiment, may contribute to increasing the power conversion efficiency.

### (Ninth embodiment)

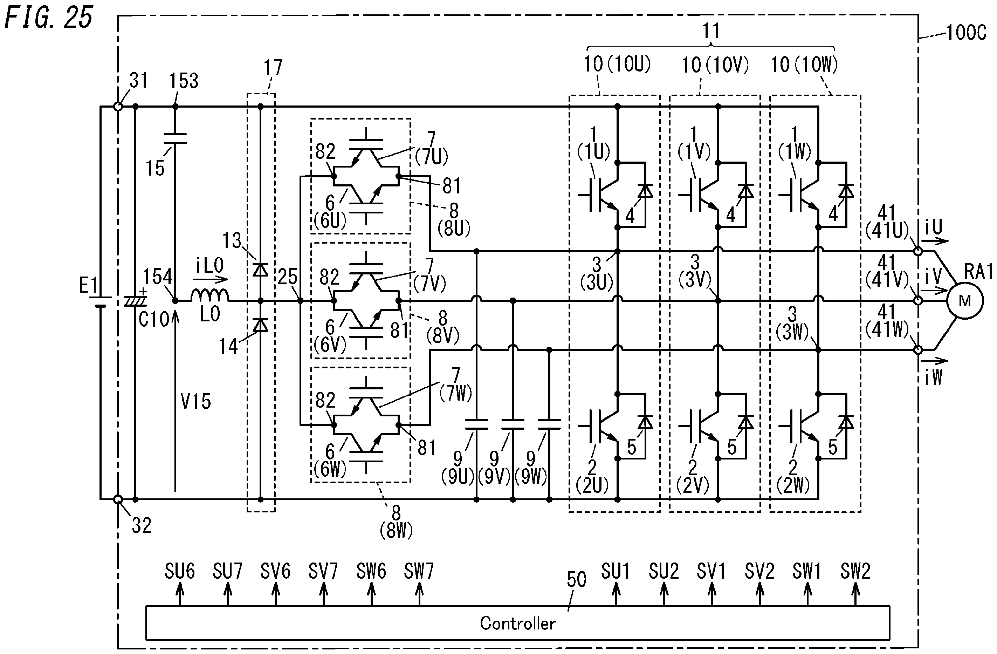

A power converter 100C according to a ninth embodiment will be described with reference to FIG. 25. In the power converter 100C according to the ninth embodiment, the regenerative capacitor 15 is connected between the second terminal of the resonant inductor L0 and the first DC terminal 31, which is a difference from the power converter 100A (refer to FIG. 8) according to the second embodiment. In the following description, any constituent element of the power converter 100C according to this ninth embodiment, having the same function as a counterpart of the power converter 100A according to the second embodiment described above, will be designated by the same reference numeral as that counterpart's, and description thereof will be omitted herein.

The controller 50 of the power converter 100C according to the ninth embodiment, as well as the controller 50 of the power converter 100A according to the second embodiment, performs the first control operation, the second control operation, and the third control operation. Thus, the power converter 100C according to the ninth embodiment, as well as the power converter 100A according to the second embodiment, may contribute to increasing the power conversion efficiency.

### (Variations)

Note that the first to ninth embodiments and their variations described above are only exemplary ones of various embodiments of the present disclosure and their variations and should not be construed as limiting. Rather, the first to ninth exemplary embodiments and their variations may be readily modified in various manners depending on a design choice or any other factor without departing from the scope of the present disclosure.

For example, each of the plurality of first switching elements 1 and the plurality of second switching elements 2 does not have to be an IGBT but may also be a metal-oxide semiconductor field effect transistor (MOSFET). In that case, each of the plurality of first diodes 4 may also be replaced with, for example, a parasitic diode of a MOSFET serving as its corresponding first switching element 1. In addition, each of the plurality of second diodes 5 may also be replaced with, for example, a parasitic diode of a MOSFET serving as its corresponding second switching element 2. The MOSFET may be, for example, an Si-based MOSFET or an SiC-based MOSFET. Each of the plurality of first switching elements 1 and the plurality of second switching elements 2 may also be, for example, a bipolar transistor or a GaN-based gate injection transistor (GIT).

Optionally, in the power converters 100, 100A, 100B, 100C, if each of the plurality of resonant capacitors 9 has a relatively small capacitance, then the parasitic capacitors across the plurality of second switching elements 2 may also serve as the plurality of resonant capacitors 9 instead of providing the plurality of resonant capacitors 9 as separate elements.

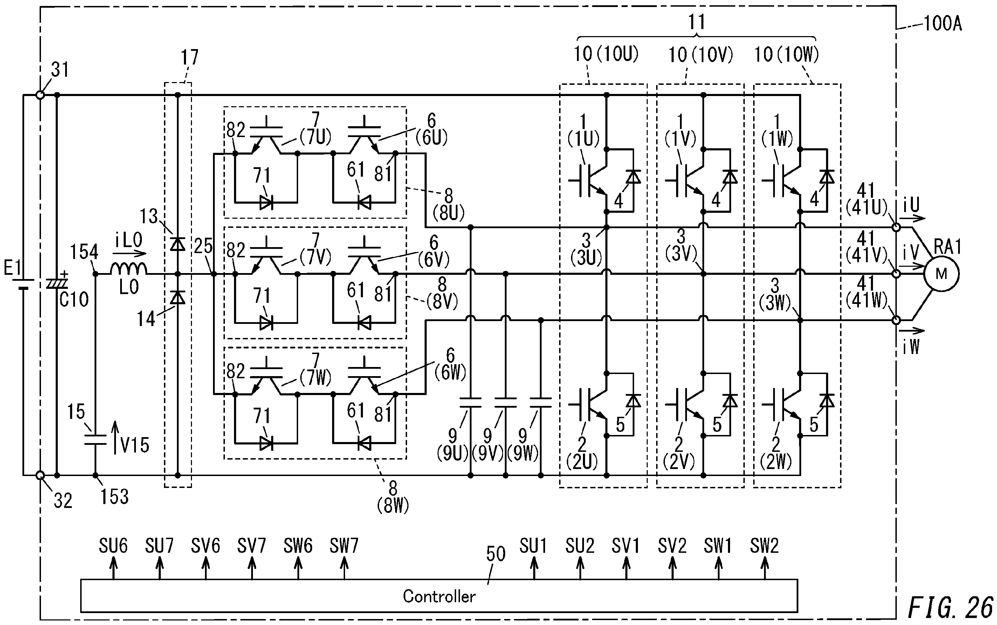

For example, each of the plurality of bidirectional switches 8 in the power converter 100A according to the second embodiment may have any of the exemplary alternative configurations shown in FIGS. 26-30.

In the example illustrated in FIG. 26, in each of the plurality of bidirectional switches 8, the first IGBT 6 and second IGBT 7 thereof are connected in anti-series. In the example illustrated in FIG. 26, in each of the plurality of bidirectional switches 8, the collector terminal of the first IGBT 6 and the collector terminal of the second IGBT 7 are connected to each other, the emitter terminal of the first IGBT 6 is connected to the connection node 3 of a corresponding one of the plurality of switching circuits 10, and the emitter of the second IGBT 7 is connected to a common connection node 25. In addition, each of the plurality of bidirectional switches 8 further includes a diode 61 connected to the first IGBT 6 in antiparallel and a diode 71 connected to the second IGBT 7 in antiparallel.

In the example illustrated in FIG. 26, each of the first IGBT 6 and the second IGBT 7 may be replaced with either a MOSFET or a bipolar transistor. In that case, the diode 61 and diode 71 shown in FIG. 26 may be each replaced with, for example, either a parasitic diode of the replacement element or an element built in one chip of the replacement element. Also, the diode 61 and the diode 71 shown in FIG. 26 do not have to be provided as external elements for the first IGBT 6 and the second IGBT 7, respectively, but may also be elements built in one chip.

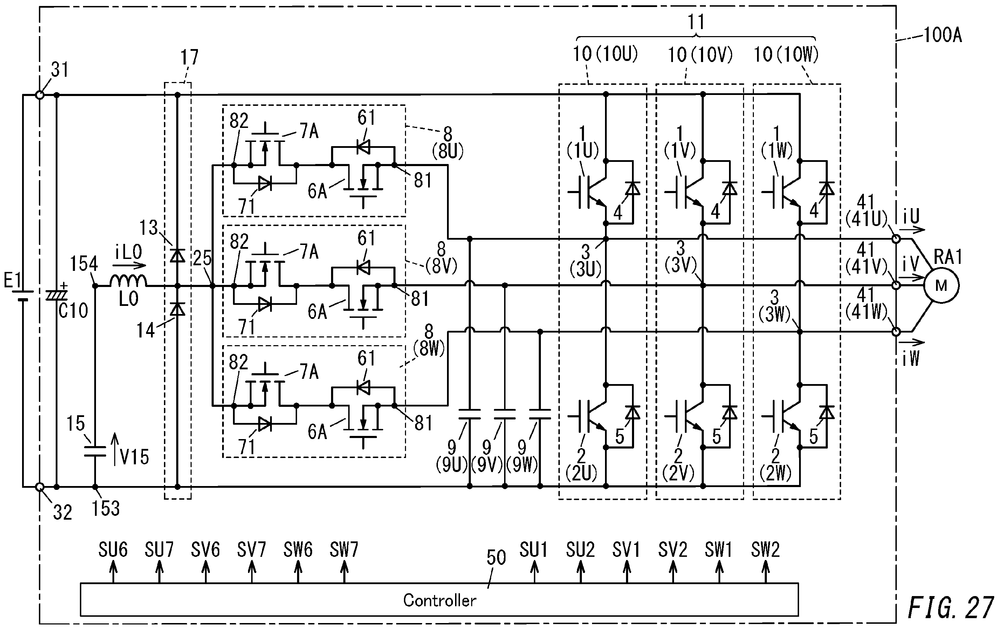

In the example illustrated in FIG. 27, in each of the bidirectional switches 8, a first MOSFET 6A and a second MOSFET 7A are connected in anti-series. In the example illustrated in FIG. 27, in each of the plurality of bidirectional switches 8, the drain terminal of the first MOSFET 6A and the drain terminal of the second MOSFET 7A are connected to each other. In addition, each of the plurality of bidirectional switches 8 further includes a diode 61 connected to the first MOSFET 6A in antiparallel and a diode 71 connected to the second MOSFET 7A in antiparallel. In each of the plurality of bidirectional switches 8, the source terminal of the second MOSFET 7A is connected to the common connection node 25. In each of the plurality of bidirectional switches 8, the source terminal of the first MOSFET 6A is connected to the connection node 3 of a switching circuit 10 corresponding to the bidirectional switch 8 including the first MOSFET 6A. PWM signals SU1, SU2 are respectively applied from the controller 50 to the first MOSFET 6A and second MOSFET 7A of the bidirectional switch 8U. PWM signals SV1, SV2 are respectively applied from the controller 50 to the first MOSFET 6A and second MOSFET 7A of the bidirectional switch 8V. PWM signals SW1, SW2 are respectively applied from the controller 50 to the first MOSFET 6A and second MOSFET 7A of the bidirectional switch 8W.

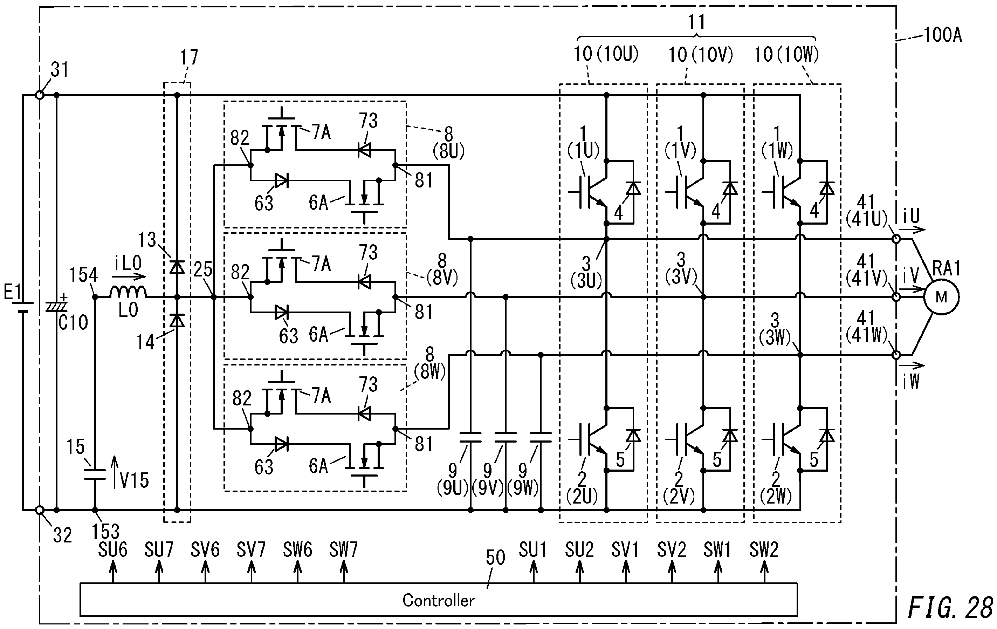

In the example illustrated in FIG. 28, in each of the plurality of bidirectional switches 8, a diode 63 is connected to a first MOSFET 6A in series and a diode 73 is connected to a second MOSFET 7A in series. In FIG. 28, a series circuit of the first MOSFET 6A and the diode 63 and a series circuit of the second MOSFET 7A and the diode 73 are connected to each other in antiparallel.

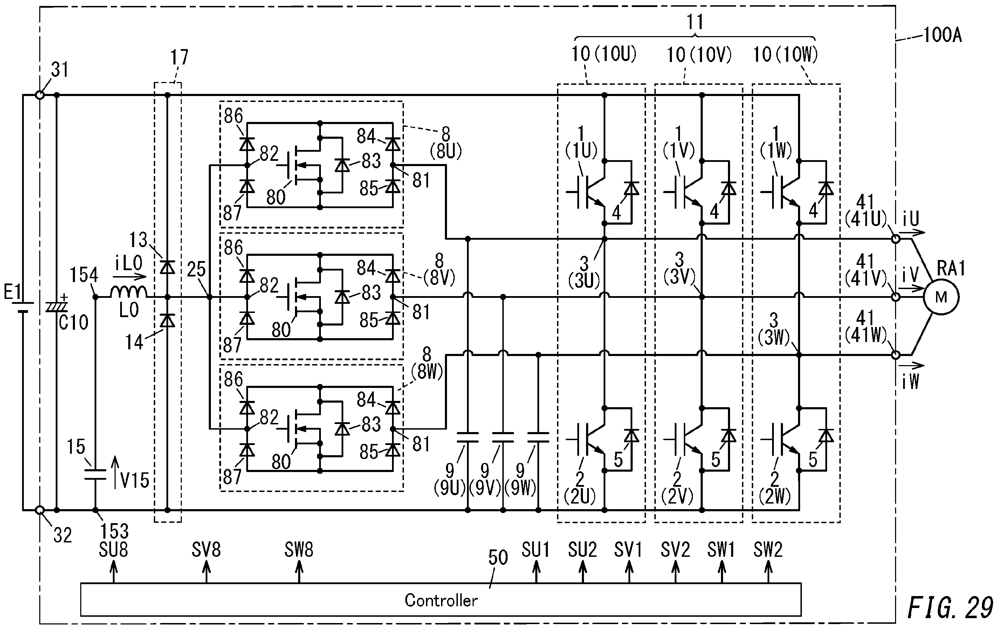

In the example illustrated in FIG. 29, each of the plurality of bidirectional switches 8 includes: a MOSFET 80; a diode 83 connected to the MOSFET 80 in antiparallel; a series circuit of two diodes 84, 85 connected to the MOSFET 80 in antiparallel; and a series circuit of two diodes 86, 87 connected to the MOSFET 80 in antiparallel. In each of the plurality of bidirectional switches 8, the connection node between the diodes 84, 85 in the bidirectional switch 8 (i.e., a first terminal 81 of the bidirectional switch 8) is connected to the connection node 3 of a corresponding one of the plurality of switching circuits 10, and a connection node between the diodes 86, 87 (i.e., a second terminal 82 of the bidirectional switch 8) is connected to the common connection node 25. In each of the bidirectional switches 8, when the MOSFET 80 is ON, the bidirectional switch 8 is ON. On the other hand, when the MOSFET 80 is OFF, the bidirectional switch 8 is OFF.

The MOSFETs 80 of the plurality of bidirectional switches 8 are controlled by the controller 50. The controller 50 outputs a control signal SU8 for controlling the ON/OFF states of the MOSFET 80 of the bidirectional switch 8U, a control signal SV8 for controlling the ON/OFF states of the MOSFET 80 of the bidirectional switch 8V, and a control signal SW8 for controlling the ON/OFF states of the MOSFET 80 of the bidirectional switch 8W.

In the bidirectional switch 8, when the MOSFET 80 is ON, a resonant current produced by a resonant circuit including the resonant inductor L0 and the resonant capacitor 9 flows. In the power converter 100A, a charging current including the resonant current flows, when one of the plurality of bidirectional switches 8 is ON, along the path passing through the regenerative capacitor 15, the resonant inductor L0, the diode 86, the MOSFET 80, the diode 85, the connection node 3, and the resonant capacitor 9 in this order. Also, in the power converter 100A, a discharging current including the resonant current flows, when one of the plurality of bidirectional switches 8 is ON, along the path passing through the resonant capacitor 9, the diode 84, the MOSFET 80, the diode 87, the resonant inductor L0, and regenerative capacitor 15 in this order.

In the example illustrated in FIG. 29, each MOSFET 80 may be replaced with an IGBT. Also, in the example illustrated in FIG. 29, each of the plurality of bidirectional switches 8 may include, for example, a bipolar transistor or a GaN-based GIT instead of the MOSFET 80.

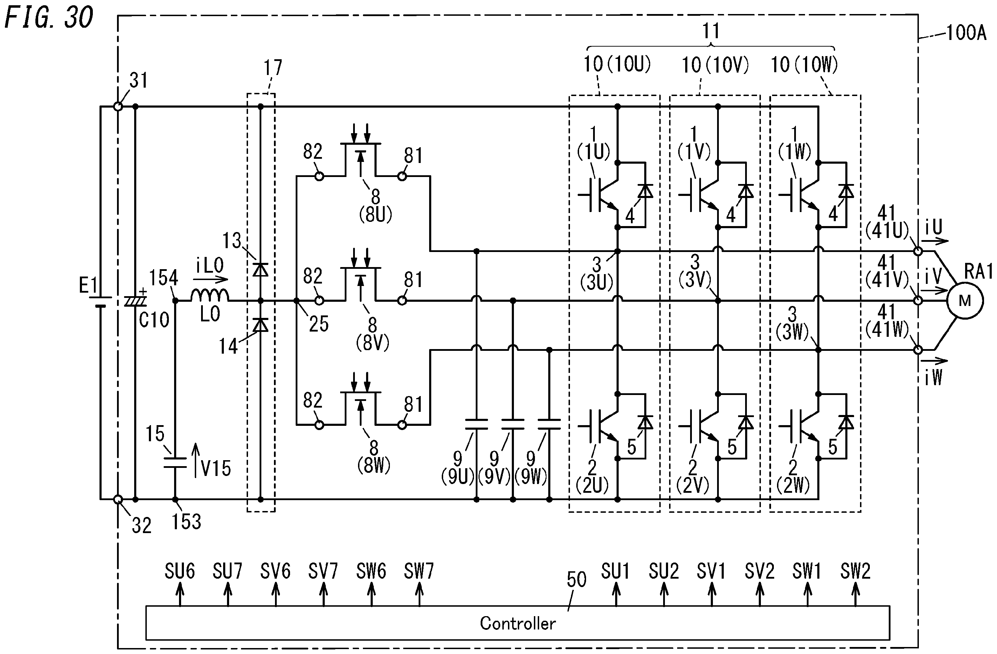

In the example illustrated in FIG. 30, each of the plurality of bidirectional switches 8 is a dual-gate GaN-based GIT including a first source terminal, a first gate terminal, a second gate terminal, and a second source terminal. In the example illustrated in FIG. 30, a control signal SU6 is applied to between the first gate terminal and first source terminal of a dual-gate GaN-based GIT serving as the bidirectional switch 8U, and a control signal SU7 is applied to between the second gate terminal and the second source terminal thereof. In addition, a control signal SV6 is applied to between the first gate terminal and first source terminal of a dual-gate GaN-based GIT serving as the bidirectional switch 8V, and a control signal SV7 is applied to between the second gate terminal and the second source terminal thereof. Furthermore, a control signal SW6 is applied to between the first gate terminal and first source terminal of a dual-gate GaN-based GIT serving as the bidirectional switch 8W, and a control signal SW7 is applied to between the second gate terminal and the second source terminal thereof.

Optionally, in the first embodiment and the third to ninth embodiments other than the second embodiment, each of the plurality of bidirectional switches 8 may have, for example, the configuration shown in any one of FIGS. 26-30.

Furthermore, the power converter 100, 100A, 100B, 100C does not have to be configured to output three-phase AC power but may also be configured to output multi-phase AC power in more than three phases.

### (Aspects)

The first to ninth embodiments and their variations described above are specific implementations of the following aspects of the present disclosure.

A power converter (100; 100A; 100B; 100C) according to a first aspect includes a first DC terminal (31) and a second DC terminal (32), a power converter circuit (11), a plurality of AC terminals (41), a plurality of bidirectional switches (8), a plurality of resonant capacitors (9), a regenerative capacitor (15), a first resonant inductor (L1), a second resonant inductor (L2), a third resonant inductor (L3), and a controller (50). The power converter circuit (11) includes a plurality of first switching elements (1) and a plurality of second switching elements (2). In the power converter circuit (11), a plurality of switching circuits (10), in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31), and the plurality of second switching elements (2) are connected to the second DC terminal (32). The plurality of AC terminals (41) are provided one to one for the plurality of switching circuits (10), respectively. Each of the plurality of AC terminals (41) is connected to a connection node (3) between the first switching element (1) and the second switching element (2) of a corresponding one of the plurality of switching circuits (10). The plurality of bidirectional switches (8) are provided one to one for the plurality of switching circuits (10). Each of the plurality of bidirectional switches (8) has a first terminal (81) thereof connected to the connection node (3) between the first switching element (1) and the second switching element (2) of a corresponding one of the plurality of switching circuits (10). The plurality of resonant capacitors (9) are provided one to one for the plurality of bidirectional switches (8), respectively. Each of the plurality of resonant capacitors (9) is connected between the first terminal (81) of a corresponding one of the plurality of bidirectional switches (8) and the second DC terminal (32). The regenerative capacitor (15) has a third terminal (153) and a fourth terminal (154). The third terminal (153) of the regenerative capacitor (15) is connected to either the first DC terminal (31) or the second DC terminal (32). The first resonant inductor (L1) is connected between a first bidirectional switch (bidirectional switch 8U) belonging to the plurality of bidirectional switches (8) and the fourth terminal (154) of the regenerative capacitor (15). The second resonant inductor (L2) is connected between a second bidirectional switch (bidirectional switch 8V) belonging to the plurality of bidirectional switches (8) and the fourth terminal (154) of the regenerative capacitor (15). The third resonant inductor (L3) is connected between a third bidirectional switch (bidirectional switch 8W) belonging to the plurality of bidirectional switches (8) and the fourth terminal (154) of the regenerative capacitor (15). The controller (50) applies a PWM signal (SU1, SV1, SW1, SU2, SV2, SW2) having a potential alternating between a high level and a low level to each of the plurality of first switching elements (1) and the plurality of second switching elements (2). The controller (50) performs a first control operation. The first control operation includes setting, with respect to each of the plurality of switching circuits (10), a dead time (Td) between a high-level period of the PWM signal (SU1, SV1, SW1) for the first switching element (1) and a high-level period of the PWM signal (SU2, SV2, SW2) for the second switching element (2). The first control operation further includes causing a high-level period of a control signal for each of the plurality of bidirectional switches (8), corresponding to one of the plurality of switching circuits (10), to overlap with the dead time (Td) and setting a beginning of the high-level period at a point in time earlier than a beginning of the dead time (Td) by an additional time. The controller (50) acquires a potential detected at the fourth terminal (154) of the regenerative capacitor (15). When the potential detected is less than a first threshold value (Vth1) that is less than one half of a value (Vd) of voltage applied between the first DC terminal (31) and the second DC terminal (32), the controller (50) performs a second control operation including raising a potential at the fourth terminal (154) of the regenerative capacitor (15). When the potential detected is greater than a second threshold value (Vth2) that is greater than one half of the value (Vd) of the voltage applied between the first DC terminal (31) and the second DC terminal (32), the controller (50) performs a third control operation including lowering the potential at the fourth terminal (154) of the regenerative capacitor (15).

This aspect may contribute to increasing the power conversion efficiency.

In a power converter (100; 100A; 100B; 100C) according to a second aspect, which may be implemented in conjunction with the first aspect, the controller (50) acquires the potential detected at the fourth terminal (154) of the regenerative capacitor (15) every cycle of a carrier signal. The second control operation is an operation of controlling, according to respective polarities of a plurality of output currents (iU, iV, iW) supplied from the plurality of AC terminals (41), the plurality of bidirectional switches (8) to raise the potential (V15) at the fourth terminal (154) of the regenerative capacitor (15). The third control operation is an operation of controlling, according to the respective polarities of the plurality of output currents (iU, iV, iW) supplied from the plurality of AC terminals (41), the plurality of bidirectional switches (8) to lower the potential (V15) at the fourth terminal (154) of the regenerative capacitor (15).

This aspect allows the variation in the potential at the fourth terminal (154) of the regenerative capacitor (15) to be reduced more quickly.

In a power converter (100; 100A; 100B; 100C) according to a third aspect, which may be implemented in conjunction with the second aspect, the controller (50) performs the second control operation by setting, according to the respective polarities of the plurality of output currents (iU, iV, iW) supplied from the plurality of AC terminals (41), a high-level period of one of the plurality of bidirectional switches (8), which participates in a discharging operation of the regenerative capacitor (15), at zero. The controller (50) performs the third control operation by setting, according to the respective polarities of the plurality of output currents (iU, iV, iW) supplied from the plurality of AC terminals (41), a high-level period of one of the plurality of bidirectional switches (8), which participates in a charging operation of the regenerative capacitor (15), at zero.

This aspect allows the second and third control operations to be performed by making a simple change from the first control operation.

In a power converter (100A; 100B; 100C) according to a fourth aspect, which may be implemented in conjunction with the third aspect, the first resonant inductor (L1), the second resonant inductor (L2), and the third resonant inductor (L3) are implemented as a single resonant inductor (L0). The controller (50) synchronizes, when determining that two-phase resonant currents, corresponding to two switching circuits (10) belonging to the plurality of switching circuits (10), flow simultaneously through the single resonant inductor (L0) while performing the first control operation, beginnings and ends of respective high-level periods of two control signals for two bidirectional switches (8), respectively corresponding to the two switching circuits (10), out of the plurality of bidirectional switches (8), with each other by extending the high-level periods of the two control signals. The controller (50) performs the second control operation by setting, according to the respective polarities of the plurality of output currents (iU, iV, iW) supplied from the plurality of AC terminals (41), a high-level period of a control signal for at least one of two bidirectional switches (8), which participate in the discharging operation of the regenerative capacitor (15), out of the plurality of bidirectional switches (8) at zero. The controller (50) performs the third control operation by setting, according to the respective polarities of the plurality of output currents (iU, iV, iW) supplied from the plurality of AC terminals (41), a high-level period of a control signal for at least one of two bidirectional switches (8), which participate in a charging operation of the regenerative capacitor (15), out of the plurality of bidirectional switches (8) at zero.

This aspect may contribute to increasing the power conversion efficiency and reducing noise in a configuration in which only one resonant inductor (L0) is provided.

In a power converter (100; 100A; 100B; 100C) according to a fifth aspect, which may be implemented in conjunction with the second aspect, the controller (50) performs the second control operation by shortening, according to the respective polarities of the plurality of output currents (iU, iV, iW) supplied from the plurality of AC terminals (41), a high-level period of a control signal for a bidirectional switch (8), which participates in a discharging operation of the regenerative capacitor (15), out of the plurality of bidirectional switches (8) to make an integrated value of a current flowing through the regenerative capacitor (15) in one cycle of a carrier signal equal to zero. The controller (50) performs the third control operation by shortening, according to the respective polarities of the plurality of output currents (iU, iV, iW) supplied from the plurality of AC terminals (41), a high-level period of a control signal for a bidirectional switch (8), which participates in a charging operation of the regenerative capacitor (15), out of the plurality of bidirectional switches (8) to make the integrated value of the current flowing through the regenerative capacitor (15) in one cycle of the carrier signal equal to zero.

This aspect may cut down the switching loss involved with the second and third control operations, thus enabling further increasing the power conversion efficiency.

In a power converter (100; 100A; 100B; 100C) according to a sixth aspect, which may be implemented in conjunction with the fifth aspect, the first resonant inductor (L1), the second resonant inductor (L2), and the third resonant inductor (L3) are implemented as a single resonant inductor (L0). The controller (50) synchronizes, when determining that two-phase resonant currents, corresponding to two switching circuits (10) belonging to the plurality of switching circuits (10), flow simultaneously through the single resonant inductor (L0) while performing the first control operation, beginnings and ends of respective high-level periods of two control signals for two bidirectional switches (8), respectively corresponding to the two switching circuits (10), out of the plurality of bidirectional switches (8), with each other by extending the high-level periods of the two control signals. The controller (50) performs the second control operation by shortening a high-level period of a control signal for each of the two bidirectional switches (8) to make an integrated value of a current flowing through the regenerative capacitor (15) in one cycle of a carrier signal equal to zero. The controller (50) performs the third control operation by shortening a high-level period of the control signal for each of the two bidirectional switches (8) to make the integrated value of the current flowing through the regenerative capacitor (15) in one cycle of the carrier signal equal to zero.

This aspect may contribute to increasing the power conversion efficiency and reducing the noise in a configuration in which only one resonant inductor (L0) is provided.

In a power converter (100; 100A; 100B; 100C) according to a seventh aspect, which may be implemented in conjunction with the second aspect, the controller (50) performs the second control operation by extending, according to the respective polarities of the plurality of output currents (iU, iV, iW) supplied from the plurality of AC terminals (41), the shortest one of high-level periods of a control signal for a bidirectional switch (8), which participates in a charging operation of the regenerative capacitor (15), out of the plurality of bidirectional switches (8) to make an integrated value of a current flowing through the regenerative capacitor (15) in one cycle of a carrier signal equal to zero. The controller (50) performs the third control operation by extending, according to the respective polarities of the plurality of output currents (iU, iV, iW) supplied from the plurality of AC terminals (41), the shortest one of high-level periods of a control signal for a bidirectional switch (8), which participates in a discharging operation of the regenerative capacitor (15), out of the plurality of bidirectional switches (8) to make the integrated value of the current flowing through the regenerative capacitor (15) in one cycle of the carrier signal equal to zero.

This aspect may cut down the switching loss involved with the second and third control operations, thus enabling further increasing the power conversion efficiency.

In a power converter (100A; 100B; 100C) according to an eighth aspect, which may be implemented in conjunction with the seventh aspect, the first resonant inductor (L1), the second resonant inductor (L2), and the third resonant inductor (L3) are implemented as a single resonant inductor (L0). The controller (50) synchronizes, when determining that two-phase resonant currents, corresponding to two switching circuits (10) belonging to the plurality of switching circuits (10), flow simultaneously through the single resonant inductor (L0) while performing the first control operation, beginnings and ends of respective high-level periods of two control signals for two bidirectional switches (8), respectively corresponding to the two switching circuits (10), out of the plurality of bidirectional switches (8), with each other by extending the high-level periods of the two control signals. The controller (50) performs the second control operation by extending a high-level period of a control signal for a bidirectional switch (8) different from the two bidirectional switches (8) to make an integrated value of a current flowing through the regenerative capacitor (15) in one cycle of a carrier signal equal to zero. The controller (50) performs the third control operation by extending a high-level period of the control signal for the bidirectional switch (8) different from the two bidirectional switches (8) to make the integrated value of the current flowing through the regenerative capacitor (15) in one cycle of the carrier signal equal to zero.

This aspect may cut down the switching loss involved with the second and third control operations, thus enabling further increasing the power conversion efficiency.

A power converter (100) according to a ninth aspect includes a first DC terminal (31) and a second DC terminal (32), a power converter circuit (11), a plurality of AC terminals (41), a plurality of bidirectional switches (8), a plurality of resonant capacitors (9), a regenerative capacitor (15), a first resonant inductor (L1), a second resonant inductor (L2), a third resonant inductor (L3), and a controller (50). The power converter circuit (11) includes a plurality of first switching elements (1) and a plurality of second switching elements (2). In the power converter circuit (11), a plurality of switching circuits (10), in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31), and the plurality of second switching elements (2) are connected to the second DC terminal (32). The plurality of AC terminals (41) are provided one to one for the plurality of switching circuits (10), respectively. Each of the plurality of AC terminals (41) is connected to a connection node (3) between the first switching element (1) and the second switching element (2) of a corresponding one of the plurality of switching circuits (10). The plurality of bidirectional switches (8) are provided one to one for the plurality of switching circuits (10). Each of the plurality of bidirectional switches (8) has a first terminal (81) thereof connected to the connection node (3) between the first switching element (1) and the second switching element (2) of a corresponding one of the plurality of switching circuits (10). The plurality of resonant capacitors (9) are provided one to one for the plurality of bidirectional switches (8), respectively. Each of the plurality of resonant capacitors (9) is connected between the first terminal (81) of a corresponding one of the plurality of bidirectional switches (8) and the second DC terminal (32). The regenerative capacitor (15) has a third terminal (153) and a fourth terminal (154). The third terminal (153) of the regenerative capacitor (15) is connected to either the first DC terminal (31) or the second DC terminal (32). The first resonant inductor (L1) is connected between a first bidirectional switch (bidirectional switch 8U) belonging to the plurality of bidirectional switches (8) and the fourth terminal (154) of the regenerative capacitor (15). The second resonant inductor (L2) is connected between a second bidirectional switch (bidirectional switch 8V) belonging to the plurality of bidirectional switches (8) and the fourth terminal (154) of the regenerative capacitor (15). The third resonant inductor (L3) is connected between a third bidirectional switch (bidirectional switch 8W) belonging to the plurality of bidirectional switches (8) and the fourth terminal (154) of the regenerative capacitor (15). The controller (50) applies a PWM signal (SU1, SU2, SV1, SV2, SW1, SW2) having a potential alternating between a high level and a low level to each of the plurality of first switching elements (1) and the plurality of second switching elements (2). The controller (50) performs a first control operation. The first control operation includes: setting, with respect to each of the plurality of switching circuits (10), a dead time (Td) between a high-level period of the PWM signal (SU1, SV1, SW1) for the first switching element (1) and a high-level period of the PWM signal (SU2, SV2, SW2) for the second switching element (2). The first control operation includes causing a high-level period of a control signal for each of the plurality of bidirectional switches (8), corresponding to one of the plurality of switching circuits (10), to overlap with the dead time (Td) and setting a beginning of the high-level period at a point in time earlier than a beginning of the dead time (Td) by an additional time. The controller (50) acquires a potential detected at the fourth terminal (154) of the regenerative capacitor (15). When the potential detected is less than a first threshold value (Vth1) that is less than one half of a value (Vd) of voltage applied between the first DC terminal (31) and the second DC terminal (32), the controller (50) performs a second control operation including applying, according to respective polarities of a plurality of output currents (iU, iV, iW) supplied from the plurality of AC terminals (41), a control signal having a high-level period, associated with a charging operation of the regenerative capacitor (15), to one bidirectional switch (8) belonging to the plurality of bidirectional switches (8) besides applying a control signal, having a high-level period overlapping with the dead time (Td), to the one bidirectional switch (8) in one cycle of a carrier signal. When the potential detected is greater than a second threshold value (Vth2) that is greater than one half of the value (Vd) of the voltage applied between the first DC terminal (31) and the second DC terminal (32), the controller (50) performs a third control operation of applying, according to respective polarities of a plurality of output currents (iU, iV, iW) supplied from the plurality of AC terminals (41), a control signal having a high-level period, associated with a discharging operation of the regenerative capacitor (15), to one bidirectional switch (8) belonging to the plurality of bidirectional switches (8) besides applying the control signal, having the high-level period overlapping with the dead time (Td), to the one bidirectional switch (8) in one cycle of the carrier signal.

This aspect may contribute to increasing the power conversion efficiency.

### Reference Signs List

- 1: First Switching Element
- 2: Second Switching Element
- 3: Connection Node
- 8: Bidirectional Switch
- 9: Resonant Capacitor
- 10: Switching Circuit
- 11: Power Converter Circuit
- 15: Regenerative Capacitor
- 153: Third Terminal
- 154: Fourth Terminal
- 31: First DC terminal
- 32: Second DC terminal
- 41: AC Terminal
- 50: Controller
- 100, 100A, 100B, 100C: Power Converter
- iU, iV, iW: Output Current
- L0: Resonant Inductor
- L1: First Resonant Inductor
- L2: Second Resonant Inductor
- L3: Third Resonant Inductor
- Td: Dead Time
- Vd: Voltage Value
- Vth1: First Threshold Value
- Vth2: Second Threshold Value

## Claims

1. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, respectively, each of the plurality of AC terminals being connected to a connection node between the first switching element and the second switching element of a corresponding one of the plurality of switching circuits;
a plurality of bidirectional switches provided one to one for the plurality of switching circuits, each of the plurality of bidirectional switches having a first terminal thereof connected to the connection node between the first switching element and the second switching element of a corresponding one of the plurality of switching circuits;
a plurality of resonant capacitors provided one to one for the plurality of bidirectional switches, respectively, each of the plurality of resonant capacitors being connected between the first terminal of a corresponding one of the plurality of bidirectional switches and the second DC terminal;
a regenerative capacitor having a third terminal and a fourth terminal, the third terminal of the regenerative capacitor being connected to either the first DC terminal or the second DC terminal;
a first resonant inductor connected between a first bidirectional switch belonging to the plurality of bidirectional switches and the fourth terminal of the regenerative capacitor;
a second resonant inductor connected between a second bidirectional switch belonging to the plurality of bidirectional switches and the fourth terminal of the regenerative capacitor;
a third resonant inductor connected between a third bidirectional switch belonging to the plurality of bidirectional switches and the fourth terminal of the regenerative capacitor; and
a controller configured to apply a PWM signal to each of the plurality of first switching elements and the plurality of second switching elements, the PWM signal having a potential alternating between a high level and a low level,
the controller being configured to:
perform a first control operation including: setting, with respect to each of the plurality of switching circuits, a dead time between a high-level period of the PWM signal for the first switching element and a high-level period of the PWM signal for the second switching element; causing a high-level period of a control signal for each of the plurality of bidirectional switches, corresponding to one of the plurality of switching circuits, to overlap with the dead time; and setting a beginning of the high-level period at a point in time earlier than a beginning of the dead time by an additional time;
acquire a potential detected at the fourth terminal of the regenerative capacitor;
perform, when the potential detected is less than a first threshold value that is less than one half of a value of voltage applied between the first DC terminal and the second DC terminal, a second control operation including raising a potential at the fourth terminal of the regenerative capacitor; and
perform, when the potential detected is greater than a second threshold value that is greater than one half of the value of the voltage applied between the first DC terminal and the second DC terminal, a third control operation including lowering the potential at the fourth terminal of the regenerative capacitor.

2. The power converter of claim 1, wherein
the controller is configured to acquire the potential detected at the fourth terminal of the regenerative capacitor every cycle of a carrier signal,
the second control operation is an operation of controlling, according to respective polarities of a plurality of output currents supplied from the plurality of AC terminals, the plurality of bidirectional switches to raise the potential at the fourth terminal of the regenerative capacitor, and
the third control operation is an operation of controlling, according to the respective polarities of the plurality of output currents supplied from the plurality of AC terminals, the plurality of bidirectional switches to lower the potential at the fourth terminal of the regenerative capacitor.

3. The power converter of claim 2, wherein
the controller is configured to:
perform the second control operation by setting, according to the respective polarities of the plurality of output currents supplied from the plurality of AC terminals, a high-level period of one of the plurality of bidirectional switches, which participates in a discharging operation of the regenerative capacitor, at zero, and
perform the third control operation by setting, according to the respective polarities of the plurality of output currents supplied from the plurality of AC terminals, a high-level period of one of the plurality of bidirectional switches, which participates in a charging operation of the regenerative capacitor, at zero.

4. The power converter of claim 3, wherein
the first resonant inductor, the second resonant inductor, and the third resonant inductor are implemented as a single resonant inductor, and
the controller is configured to:
synchronize, when determining that two-phase resonant currents, corresponding to two switching circuits belonging to the plurality of switching circuits, flow simultaneously through the single resonant inductor while performing the first control operation, beginnings and ends of respective high-level periods of two control signals for two bidirectional switches, respectively corresponding to the two switching circuits, out of the plurality of bidirectional switches, with each other by extending the high-level periods of the two control signals;
perform the second control operation by setting, according to the respective polarities of the plurality of output currents supplied from the plurality of AC terminals, a high-level period of a control signal for at least one of two bidirectional switches, which participate in the discharging operation of the regenerative capacitor, out of the plurality of bidirectional switches at zero, and
perform the third control operation by setting, according to the respective polarities of the plurality of output currents supplied from the plurality of AC terminals, a high-level period of a control signal for at least one of two bidirectional switches, which participate in a charging operation of the regenerative capacitor, out of the plurality of bidirectional switches at zero.

5. The power converter of claim 2, wherein
the controller is configured to:
perform the second control operation by shortening, according to the respective polarities of the plurality of output currents supplied from the plurality of AC terminals, a high-level period of a control signal for a bidirectional switch, which participates in a discharging operation of the regenerative capacitor, out of the plurality of bidirectional switches to make an integrated value of a current flowing through the regenerative capacitor in one cycle of a carrier signal equal to zero; and
perform the third control operation by shortening, according to the respective polarities of the plurality of output currents supplied from the plurality of AC terminals, a high-level period of a control signal for a bidirectional switch, which participates in a charging operation of the regenerative capacitor, out of the plurality of bidirectional switches to make the integrated value of the current flowing through the regenerative capacitor in one cycle of the carrier signal equal to zero.

6. The power converter of claim 5, wherein
the first resonant inductor, the second resonant inductor, and the third resonant inductor are implemented as a single resonant inductor, and
the controller is configured to:
synchronize, when determining that two-phase resonant currents, corresponding to two switching circuits belonging to the plurality of switching circuits, flow simultaneously through the single resonant inductor while performing the first control operation, beginnings and ends of respective high-level periods of two control signals for two bidirectional switches, respectively corresponding to the two switching circuits, out of the plurality of bidirectional switches, with each other by extending the high-level periods of the two control signals;
perform the second control operation by shortening a high-level period of a control signal for each of the two bidirectional switches to make an integrated value of a current flowing through the regenerative capacitor in one cycle of a carrier signal equal to zero; and
perform the third control operation by shortening a high-level period of the control signal for each of the two bidirectional switches to make the integrated value of the current flowing through the regenerative capacitor in one cycle of the carrier signal equal to zero.

7. The power converter of claim 2, wherein
the controller is configured to:
perform the second control operation by extending, according to the respective polarities of the plurality of output currents supplied from the plurality of AC terminals, the shortest one of high-level periods of a control signal for a bidirectional switch, which participates in a charging operation of the regenerative capacitor, out of the plurality of bidirectional switches to make an integrated value of a current flowing through the regenerative capacitor in one cycle of a carrier signal equal to zero; and
perform the third control operation by extending, according to the respective polarities of the plurality of output currents supplied from the plurality of AC terminals, the shortest one of high-level periods of a control signal for a bidirectional switch, which participates in a discharging operation of the regenerative capacitor, out of the plurality of bidirectional switches to make the integrated value of the current flowing through the regenerative capacitor in one cycle of the carrier signal equal to zero.

8. The power converter of claim 7, wherein
the first resonant inductor, the second resonant inductor, and the third resonant inductor are implemented as a single resonant inductor, and
the controller is configured to:
synchronize, when determining that two-phase resonant currents, corresponding to two switching circuits belonging to the plurality of switching circuits, flow simultaneously through the single resonant inductor while performing the first control operation, beginnings and ends of respective high-level periods of two control signals for two bidirectional switches, respectively corresponding to the two switching circuits, out of the plurality of bidirectional switches, with each other by extending the high-level periods of the two control signals;
perform the second control operation by extending a high-level period of a control signal for a bidirectional switch different from the two bidirectional switches to make an integrated value of a current flowing through the regenerative capacitor in one cycle of a carrier signal equal to zero; and
perform the third control operation by extending a high-level period of the control signal for the bidirectional switch different from the two bidirectional switches to make the integrated value of the current flowing through the regenerative capacitor in one cycle of the carrier signal equal to zero.

9. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, respectively, each of the plurality of AC terminals being connected to a connection node between the first switching element and the second switching element of a corresponding one of the plurality of switching circuits;
a plurality of bidirectional switches provided one to one for the plurality of switching circuits, each of the plurality of bidirectional switches having a first terminal thereof connected to the connection node between the first switching element and the second switching element of a corresponding one of the plurality of switching circuits;
a plurality of resonant capacitors provided one to one for the plurality of bidirectional switches, respectively, each of the plurality of resonant capacitors being connected between the first terminal of a corresponding one of the plurality of bidirectional switches and the second DC terminal;
a regenerative capacitor having a third terminal and a fourth terminal, the third terminal of the regenerative capacitor being connected to either the first DC terminal or the second DC terminal;
a first resonant inductor connected between a first bidirectional switch belonging to the plurality of bidirectional switches and the fourth terminal of the regenerative capacitor;
a second resonant inductor connected between a second bidirectional switch belonging to the plurality of bidirectional switches and the fourth terminal of the regenerative capacitor;
a third resonant inductor connected between a third bidirectional switch belonging to the plurality of bidirectional switches and the fourth terminal of the regenerative capacitor; and
a controller configured to apply a PWM signal to each of the plurality of first switching elements and the plurality of second switching elements, the PWM signal having a potential alternating between a high level and a low level,
the controller being configured to:
perform a first control operation including: setting, with respect to each of the plurality of switching circuits, a dead time between a high-level period of the PWM signal for the first switching element and a high-level period of the PWM signal for the second switching element; causing a high-level period of a control signal for each of the plurality of bidirectional switches, corresponding to one of the plurality of switching circuits, to overlap with the dead time; and setting a beginning of the high-level period at a point in time earlier than a beginning of the dead time by an additional time;
acquire a potential detected at the fourth terminal of the regenerative capacitor;
perform, when the potential detected is less than a first threshold value that is less than one half of a value of voltage applied between the first DC terminal and the second DC terminal, a second control operation including applying, according to respective polarities of a plurality of output currents supplied from the plurality of AC terminals, a control signal having a high-level period, associated with a charging operation of the regenerative capacitor, to one bidirectional switch belonging to the plurality of bidirectional switches besides applying a control signal, having a high-level period overlapping with the dead time, to the one bidirectional switch in one cycle of a carrier signal; and
perform, when the potential detected is greater than a second threshold value that is greater than one half of the value of the voltage applied between the first DC terminal and the second DC terminal, a third control operation of applying, according to respective polarities of a plurality of output currents supplied from the plurality of AC terminals, a control signal having a high-level period, associated with a discharging operation of the regenerative capacitor, to one bidirectional switch belonging to the plurality of bidirectional switches besides applying the control signal, having the high-level period overlapping with the dead time, to the one bidirectional switch in one cycle of the carrier signal.
